(19) **Europäisches Patentamt**
**European Patent Office**
**Office européen des brevets**

(11) **EP 2 295 517 A1**

(12) **EUROPEAN PATENT APPLICATION**
published in accordance with Art. 153(4) EPC

(43) Date of publication:
**16.03.2011 Bulletin 2011/11**

(21) Application number: **09746521.5**

(22) Date of filing: **07.05.2009**

(51) Int Cl.:
*C09K 3/00* (2006.01)     *C08L 101/00* (2006.01)
*C08L 101/14* (2006.01)   *C09D 5/02* (2006.01)
*C09D 133/00* (2006.01)   *F16F 15/02* (2006.01)

(86) International application number:
**PCT/JP2009/058615**

(87) International publication number:
**WO 2009/139314 (19.11.2009 Gazette 2009/47)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **09.05.2008 JP 2008123804**
**27.08.2008 JP 2008217824**

(71) Applicant: **Nippon Shokubai Co., Ltd.**
**Osaka-shi, Osaka 541-0043 (JP)**

(72) Inventors:
• **YOKOTA Yoshiyuki**
**Suita-shi**
**Osaka 564-0034 (JP)**
• **MIYAWAKI Yukihiro**
**Suita-shi**
**Osaka 564-0034 (JP)**
• **NAGAISHI Dai**
**Suita-shi**
**Osaka 564-0034 (JP)**

(74) Representative: **Hart-Davis, Jason et al**
**Cabinet Beau de Loménie**
**158, rue de l'Université**
**75340 Paris Cedex 07 (FR)**

(54) **EMULSION COMPOSITION FOR VIBRATION DAMPING MATERIAL**

(57)     The present invention provides an emulsion composition for a vibration damper, which has heating and drying properties high enough to form an excellent coating film which can exhibit excellent damping without swelling during drying by heating, and an emulsion composition for a vibration damper, which can exhibit basic performances demanded in vibration dampers, in particular, markedly superior anti-sagging even under the condition of high humidity or a thick film where the coating film may sag in conventional technologies, and thus can be useful in vibration dampers of various structures. The emulsion composition for a vibration damper includes an emulsion obtainable by emulsion polymerization of monomer components, the emulsion composition containing 0.5 to 20% by mass of a film-forming agent with a weight average molecular weight of 100 to 20000 in 100% by mass of the emulsion composition.

EP 2 295 517 A1

**Description**

TECHNICAL FIELD

The present invention relates to an emulsion composition for a vibration damper. More particularly, the present invention relates to an emulsion compositions for a vibration damper, which is useful as a material for vibration dampers that are used to prevent vibration and noise of various structures, thereby to insure sustained quietude.

BACKGROUND ART

Vibration dampers are used to prevent vibration and noise of various structures to insure sustained quietude, and have been widely used beneath cabin floors of automobiles and also applied to rolling stock, ships, aircraft, electric machines, buildings, and construction machines, among other uses. As a material for such vibration dampers, molded products in the form of a plate, sheet, or the like made from materials with vibration absorbing performance and sound absorbing performance have been conventionally used. However, it is difficult to apply these molded products to a vibration or noise generation position with a complicated shape. Therefore, various approaches have been investigated to improve workability, thereby achieving sufficient damping. That is, for example, an inorganic powder-containing asphalt sheet has been installed beneath cabin floors of automobiles, and the sheet must be secured in position by thermal fusion. Therefore, for such a sheet, improvements in workability and the like have been desired, and studies on various compositions or polymers for forming vibration dampers have been made.

As an alternative to such molded products, coating type vibration damping materials (coating materials) have been developed. For example, there has been proposed various vibration damping coating materials which are sprayed onto a position to be subjected to damping treatment with a spray or applied thereto by any method to form a coating film that can provide vibration and sound absorbing effects. Specifically, there has been developed not only aqueous vibration damping coating materials in which synthetic resin powders are blended with vehicles such as asphalt, rubber, and synthetic resin and thereby the hardness of the resulting coating film is improved, but also, as materials suitably used for interior parts of automobiles, vibration damping coating materials in which activated carbon as a filler is dispersed into resin emulsion.

Such vibration damping coating materials and the like should be excellent in damping and mechanical stability. However, these conventional items do not still provide satisfactory levels of damping performances. Therefore, a technology that achieves more sufficient damping performances as well as excellent mechanical stability has been desired.

Further, in the case where such a vibration damping coating material and the like is used in industrial applications, the coating material is applied onto a base, and then dried by heating to form a coating film in view of work efficiency. During drying by heating, the coating film may swell, possibly failing to form a normal coating film. Therefore, coating materials with heating and drying properties high enough not to clause such defects have been desired.

In addition, a vibration damping coating material is to be formed onto an object to be subjected to damping treatment under various environments. When being applied on a vertical surface, conventional emulsions for a vibration damper may slide down the coating surface before dried. Therefore, there has been desired vibration damping coating materials with excellent anti-sagging, which can prevent sagging, for example, caused by slide-down of a coating film, to form an excellent coating films even on a vertical surface.

With respect to conventional coating compositions for drying by heating, for example, Patent Document 1 discloses a coating composition for drying by heating essentially including an emulsion with a glass transition temperature of 50°C or less and organic fine particles with an average particle size of 15 $\mu$m or less. This composition has improved drying property because moisture can be easily removed from the coating film attributed to the blended organic fine particles.

Further, for example, Patent Document 2 discloses an aqueous dispersion resin composition that contains 0.5 to 8% by mass of a polyacrylic acid alkali metal salt with a weight average molecular weight of 3, 000 to 10, 000 based on the aqueous dispersion resin composition. In this composition, with a view to improve the heating and drying properties, an anionic water-soluble polymer like a polyacrylic acid alkali metal salt, is added to inhibit the composition from forming a drying film during coating so that moisture inside a coating layer can easily vaporize. However, there is still room for developing a composition for a vibration damper, which has heating and drying properties superior to those of these compositions and has excellent damping.

Moreover, for example, Patent Document 3 discloses an emulsion for a vibration damper, which contains an emulsion prepared using an anionic emulsifier with a specific structure. This emulsion for a Vibration damper has improved damping and heating and drying properties because it contains an emulsion prepared using a specific anionic emulsifier in a specific amount, and thereby the particle size of the emulsion is increased. However, there is still room for developing a composition for a vibration damper, which has further improved heating and drying properties and also has excellent damping.

With respect to conventional materials for a vibration damper, for example, Patent Document 4 discloses a thickener for an aqueous vibration damper, which contains a polymer having an alkali-soluble monomer unit and an associative monomer unit. A coating material with this thickener blended therein has thixotropic viscosity. Such a property is very useful when the coating material is spray-coated. The coating material can be easily spray-coated because it exhibits high shearing force and so has low viscosity when sprayed. On the other hand, after sprayed, the coating material exhibits low shearing force and so has high viscosity, and therefore, it hardly sags.

Further, for example, Patent Document 5 discloses an emulsion for a Vibration damper, which contains a polymer and an emulsifier. The emulsifier is a nonionic emulsifier in an amount of 3% by mass or less in total mass of monomers to be used for forming the polymer. A coating film formed using this emulsion hardly suffer from such a phenomenon as sagging or slid-down on a vertical surface.

However, the above-mentioned thickener for an aqueous vibration damper or emulsion for a vibration damper are desired to exhibit sufficient anti-sagging even under the condition of high humidity or a thick film. Under high humidity condition, a coating film of an emulsion becomes difficult to be surface-dried, and thus tends to easily sag. Conventional emulsion compositions for a vibration damper do not have high anti-sagging under high humidity condition, and are susceptible to influences of working environment, about humidity. Further, an emulsion composition for a vibration damper shows more enhanced damping with increase in thickness of the coating film. On the other hand, as the thickness increases, sagging more easily occurs. Further, under high humidity condition, the thickness can not be increased as long as the emulsion coating film can exhibit excellent anti-sagging during drying. Under the above circumstances, it has been desired to provide a Vibration damper with a large thickness which can be industrially produced stably using an emulsion composition for a Vibration damper, specifically, an emulsion composition for a vibration damper, which is insusceptible to influences of working environment, about humidity, and is suitable as a material for vibration dampers of various structures.

[Citation List]

Patent Document 1: Japanese Kokai Publication No. 2004-277536 (pages 1 to 3)
Patent Document 2: Japanese Kokai Publication No. 2005-281575 (pages 1 to 3)
Patent Document 3: WO07/023821
Patent Document 4: Japanese Kokai Publication No. 2004-137485 (pages 2 and 12)
Patent Document 5: Japanese Kokai Publication No. 2005-105106 (pages 2 and 10)

SUMMARY OF THE INVENTION

PROBLEMS TO BE SOLVED BY THE INVENTION

Considering the above-described background, the present invention aims to provide an emulsion composition for a vibration damper, which has heating and drying properties high enough to form an excellent coating film which can exhibit excellent damping without swelling during drying by heating, and an emulsion composition for a vibration damper, which can exhibit basic performances demanded in vibration dampers, in particular, markedly superior anti-sagging even under the condition of high humidity or a thick film where the coating film may sag in conventional technologies, and thus can be useful in vibration dampers of various structures.

MEANS FOR SOLVING THE PROBLEMS

The present inventors made various investigations on an emulsions composition for a vibration damper, which can be suitably used in vibration dampers. Then, the inventors found that a film-forming agent with a specific weight average molecular weight in a specific amount is mixed with an emulsion obtainable by emulsion polymerization of monomer components to yield a composition capable of exhibiting various characteristics demanded in dampers at high levels as well as excellent damping.

Particularly, with respect to heating and drying properties, the inventors made various investigations on an emulsion composition for a vibration damper excellent in heating and drying properties. Then, the inventors found that swelling during drying by heating is caused because at an initial stage of drying, the coating film surface is dried, and moisture becomes difficult to be removed from the coating film, and as a result, the moisture inside the coating film is evaporated at one time when the coating film is dried by heating, and therefore, it is important to suppress the coating film surface from drying at an initial stage of drying. Further, the inventors found the following. In a composition that includes: an emulsion obtainable by emulsion-polymerizing monomer components; and a nonionic water-soluble compound, the nonionic water-soluble compound exists near the emulsion particles without adsorbing thereonto, and this suppresses drying of the coating film surface, which is caused when the emulsion particles are fused on the coating film surface at an initial stage of drying. Thus, swelling of the coating film during drying by heating can be suppressed, and as a result, an emulsion composition for a vibration damper having excellent heating and drying property can be provided. Moreover, the inventors found that the emulsion composition for a vibration damper can be provided with excellent heating and drying properties without deteriorating damping when containing a nonionic water-soluble compound in an amount in a specific range based on the emulsion composition for a vibration damper.

The present inventors further noted that for the emulsion composition for a Vibration damper which is insusceptible to influences of working environment, about humidity and is suitable as a material used in vibration dampers of various structures, it is important to exhibit anti-sagging high enough to prevent sagging of a film formed by applying a vibration damping formulation essentially containing the emulsion composition for a vibration damper. Further, the inventors found that when the emulsion composition for a vibration damper essentially includes an emulsion (A) with a specific glass transition temperature and weight average molecular weight and a polymer (B) with a glass transition temperature higher than that of the emulsion (A) and a weight average molecular weight lower than that of the emulsion (A), the emulsion composition can exhibit sufficient basic performances demanded in various dampers and also show markedly superior anti-sagging under the condition of high humidity or a thick film. Thus, the present inventors found away to solve the above-describedproblems. The inventors found that the anti-sagging is further enhanced when the polymer (B) has a glass transition temperature higher than that of the emulsion (A) by at least 50°C, or is a tackifier.

Thus, the present inventors found a way to solve the above-described problems and completed the present invention.

That is, the present invention is an emulsion composition for a vibration damper, comprising an emulsion obtainable by emulsion polymerization of monomer components, wherein the emulsion composition contains 0.5 to 20% by mass of a film-forming agent with a weight average molecular weight of 100 to 20000 in 100% by mass of the emulsion composition.

The present invention is mentioned in detail below.

The emulsion for a vibration damper of the present invention contains 0.5 to 20% by mass of a film-forming agent with a weight average molecular weight of 100 to 20000 in 100% by mass of the emulsion composition. The use of such a film-forming agent provides the emulsion composition with various characteristics demanded in vibration dampers as well as excellent damping. In the present invention, the film-forming agent means a compound having effects of making it easier to form a coating film obtainable by applying the emulsion composition to a base and/or of enhancing performances as a vibration damping coating film. The characteristics which the emulsion composition of the present invention exhibits vary depending on the kind of the film-forming agent to be used.

Hereinafter, a first embodiment of the present invention is an emulsion composition for a vibration damper which contains a nonionic water-soluble compound as the film-forming agent and has heating and drying properties high enough to form an excellent coating film without swelling during drying by heating; and a second embodiment of the present invention is an emulsion composition for a vibration damper useful in vibration dampers of various structures, which contains, as the film-forming agent, a polymer with a glass transition temperature higher than that of the emulsion and a weight average molecular weight lower than that of the emulsion, and which can exhibit markedly superior anti-sagging even under the condition of high humidity or a thick filmwhere the coating filmmay sag in conventional technologies. The emulsion composition for a vibration damper of the present invention may correspond to either the first or second embodiment, or both of them. Specifically, the emulsion composition for a vibration damper of the present invention also includes an emulsion composition for a vibration damper, which contains, as a film-forming agent, the above-mentioned nonionic water-soluble compound and the polymer with a glass transition temperature higher than that of the emulsion and a weight average molecular weight lower than that of the emulsion.

Hereinafter, the first embodiment of the present invention is first mentioned, followed by the second embodiment of the present invention.

The emulsion composition for a Vibration damper of the first embodiment of the present invention contains an emulsion obtainable by emulsion polymerization of monomer components and as a film-forming agent, a nonionic water-soluble compound in an amount of 1 to 20% by mass in 100% by mass of the emulsion composition. With respect to each of the emulsion and the nonionic water-soluble compound, one or two or more species may be contained. Further, the emulsion composition may contain other component(s) provided that it contains the emulsion and the nonionic water-soluble compound. When the emulsion composition contains other component(s), the amount of a combination of the emulsion and the nonionic water-soluble compound is preferably 50% by mass or more in 100% by mass of the emulsion composition. The amount of a combination of the emulsion and the nonionic water-soluble compound is more preferably 70% by mass or more, and still more preferably 80% by mass or more. An amount of a combination of the emulsion and the nonionic water-soluble compound of 50% by mass or less in the emulsion composition may lead to insufficient damping and heating and drying properties.

The emulsion composition for a vibration damper of the first embodiment contains 1 to 20% by mass of the nonionic water-soluble compound in 100% by mass of the emulsion composition. A nonionic water-soluble compound content of less than 1% by mass may lead to insufficient heating and drying properties. A nonionic water-soluble compound content of more than 20% by mass may lead to insufficient damping. The nonionic water-soluble compound content is more preferably 1 to 10% by mass, still more preferably 1 to 5% by mass, and most preferably 3 to 5% by mass.

The emulsion composition for a vibration damper of the first embodiment preferably contains 1 to 25% by mass of the nonionic water-soluble compound relative to 100% by mass of the emulsion obtainable by emulsion polymerization of monomer components. If the nonionic water-soluble compound amount is less than 1% by mass relative to the emulsion obtainable by emulsion polymerization of monomer components, the resulting emulsion composition may have insufficient heating and drying properties. If it is more than 25% by mass, the resulting emulsion composition may have insufficient damping. The nonionic water-soluble compound amount is more preferably 1 to 20% by mass, still more preferably 1 to 11% by mass, particularly preferably 1 to 5% by mass, and most preferably 3 to 5% by mass.

In the present invention, nonionic water-soluble polymers and nonionic surfactants can be used as the nonionic water-soluble compound. The nonionic water-soluble compound is not limited to those free of a part that is to become cation or anion in their structure, and nonionic water-soluble compounds whose structure is partly cationically or anionically modified may be used as long as the effects of the present invention are exhibited. In the nonionic water-soluble compounds whose structure is partly cationically or anionically modified, the modified part is preferably 10% or less relative to 100% of the entire part that can be cationically or anionically modified in the structure. The modified part is more preferably 5% or less.

Examples of the nonionic water-soluble compound include: nonionic water-soluble polymers such as polyethylene glycol, polyvinyl alcohol, polyvinylpyrrolidone, methyl cellulose, hydroxyethyl cellulose, and derivatives thereof; and nonionic surfactants such as polyoxyethylene alkyl aryl ethers, sorbitan aliphatic esters, polyoxyethylene sorbitan aliphatic esters, aliphatic monoglycerides, e.g., glycerol monolaurate, polyoxyethylene-oxypropylene copolymer, condensates of ethylene oxide with aliphatic amine, amide, or acid. Further, these compounds whose structure is partly cationically or anionically modified and the like also can be used.

The nonionic water-soluble compound is preferably at least one selected from the group consisting of polyethylene glycol, polyvinyl alcohol, polyvinylpyrrolidone, methyl cellulose, and hydroxyethyl cellulose. The use of these compounds as the nonionic water-soluble compound sufficiently suppresses emulsion particles from being fused on the coating film surface at an initial stage of drying of the coating film when the emulsion composition is applied to a base. Therefore, removal of moistures from the inside of the coating film is not inhibited, and thus, swelling of the coating film can be more effectively suppressed. More preferred is polyethylene glycol.

The nonionic water-soluble compound of the present invention is preferably a nonionic water-soluble polymer with a weight average molecular weight of 400 to 10000. When the nonionic water-soluble compound is such a polymer, the emulsion composition for a vibration damper of the present invention will be more excellent in heating and drying properties. The weight average molecular weight is more preferably 400 to 9000, and still more preferably 400 to 3000, and most preferably 1000 to 3000.

The weight average molecular weight can be determined by GPC (gel permeation chromatography) under the following conditions.

Measurement apparatus: HLC-8120 GPC (trade name, product of TOSOH CORP.)

Molecular weight column: serially connected TSK-GEL GMHXL-L and TSK-GEL G5000HXL (products of TOSOH CORP.)

Eluant: Tetrahydrofuran (THF)

Standard substance for calibration curve: Polystyrene (product of TOSOH CORP.)

Measurement method: A measurement object is dissolved in THE such that the solids content is about 0.2% by mass, and the mixture is filtered and the filtrate as a measurement sample is measured for molecular weight.

In the emulsion essentially contained in the emulsion composition of the first embodiment of the present invention, the emulsion particles preferably have an average particle size of 100 to 450 nm. The use of the emulsion particles with an average particle size in this range allows the resulting emulsion composition to have better damping and also to exhibit excellent heating and drying properties.

The average particle size of the emulsion particles is preferably 120 to 400 nm, and more preferably 150 to 350 nm. When the emulsion particles have an average particle size in this range, the effects of the emulsion composition of the first embodiment of the present invention can be more effectively exhibited.

The average particle size can be measured by the following procedures, for example: the emulsion was diluted with distilled water and then sufficiently stirred and mixed. Then, about 10 ml of the mixture is charged into a glass cell and subjected to measurement by a dynamic light scattering method with a particle size distribution analyzer ("NICOMP Model 380", product of Particle Sizing Systems).

In the emulsion composition of the first embodiment of the present invention, it is preferable that the emulsion particles with the above average particle size have a particle size distribution of 40% or less, the distribution being defined as a value determined by dividing the standard deviation by its volume average particle size (standard deviation/volume average particle size $\times$ 100). The particle size distribution is more preferably 30% or less. If the particle size distribution is more than 40%, the particle size distribution of the emulsion particles has a very wide width and coarse particles are partly contained, and due to such coarse particles, the emulsion, composition for a vibration damper may fail to exhibit sufficient heating and drying properties.

The pH of the emulsion composition of the first embodiment of the present invention is, but not limited to, preferably 2 to 10, and more preferably 3 to 9, for examples. The pH of the emulsion can be adjusted by adding ammonia water, waster-soluble amine, aqueous alkali hydroxide solution, or the like, into the emulsion.

The viscosity of the emulsion composition of the first embodiment of the present invention is, but not limited to, preferably 10 to 10000 mPa·s, and more preferably 50 to 5000 mPa·s, for example.
The viscosity can be measured under the conditions of 25°C and 20 rpm with a B type rotational viscometer.

The monomer components, which are raw materials of the emulsion constituting the emulsion composition of the first embodiment of the present invention, at least exhibit the effects of the present invention, and preferably contain an unsaturated carboxylic acid monomer. More preferably, the monomer components contain an unsaturated carboxylic acid monomers and other monomer(s) copolymerizable therewith. The unsaturated carboxylic acid monomer is not especially limited provided that it is a compound with an unsaturated bond and a carboxyl group in its molecule. Preferably the unsaturated carboxylic acid monomer contains an ethylenically unsaturated carboxylic acid monomer. Specifically, according to one preferable embodiment of the present invention, the emulsion compositions for a vibration damper of the first embodiment includes an emulsion obtainable by polymerizing monomer components essentially containing an ethylenically unsaturated carboxylic acid monomer.
When the emulsion particles of the present invention are below-mentioned core-shell emulsion particles, the unsaturated carboxylic acid monomer and the other monomer (s) copolymerizable therewith may be contained in either monomer components forming the core or monomer components forming the shell or in both of them.

Examples of the above-mentioned ethylenically unsaturated carboxylic acid monomer include, but not limited to, unsaturated carboxylic acids or derivatives thereof, such as (meth)acrylic acid, crotonic acid, itaconic acid, fumaric acid, maleic acid, monomethyl fumarate, monoethyl fumarate, monomethyl maleate, and monoethyl maleate. One or two or more of these may be used.
Among these, (meth)acrylic monomers are preferable. The (meth)acrylic monomers mean (meth)acrylic acid and a derivative (salt or ester) thereof.
Specifically, the emulsion constituting the emulsion composition for a vibration damper of the present invention is preferably an acrylic copolymerisation.

The "acrylic copolymer" used herein is intended to refer to a copolymer obtainable using at least two different monomer components, at least one being a (meth)acrylic monomer. Among these, an acrylic copolymer obtainable using monomer components containing a (meth)acrylic acid monomer is preferable. The (meth)acrylic acid monomer means (meth)acrylic acid and its salt. That is, the acrylic copolymers of the present invention is preferably obtainable using monomer at least one of which is a monomer represented by $C(R^1_2)=CH\text{-}COOR^2$ or $C(R^3_2)=C(CH_3)\text{-}COOR^4$ ($R^4$ $R^2$, $R^3$, and $R^4$ are the same as or different from one another, and represent hydrogen, metal, ammonium, or organic amine).

The monomer components, which are raw materials for the acrylic copolymer, contain 0.1 to 20% by mass of a (meth)acrylic acid monomer and 99.9 to 80% by mass of other ethylenically unsaturated monomer(s) copolymerizable with the (meth)acrylic acid monomer in 100% by mass of all the monomer components. When the monomer components contain a (meth)acrylic acid monomer, a vibration damping formulation essentially containing the emulsion composition of the first embodiment of the present invention shows enhanced dispersibility for a filler such as inorganic powder filler to exhibit better damping. Further, when the monomer components contain other copolymerizable ethylenically unsaturated monomer(s), it becomes easier to adjust acid value, Tg, physical properties, and the like of the emulsion. When the (meth)acrylic acid monomer is less than 0.1% by mass or more than 20% by mass in the monomer components, the emulsion may not be stably obtained through copolymerization. Contributed to synthetic effects of monomer units derived from these monomers, the emulsion of the present invention can more sufficiently exhibit excellent heating and drying properties and damping when used in aqueous vibration dampers.
More preferably, the monomer components contain 0.5 to 3% by mass of a (meth)acrylic acid monomer and 99. 5 to 97% by mass of other copolymerizable ethylenically unsaturated monomer(s) in 100% by mass of all the monomer components.
The other copolymerizable ethylenically unsaturated monomer(s) includes below-mentioned (meth)acrylic monomers other than (meth)acrylic acid monomers, nitrogen-containing unsaturated monomers, aromatic ring-containing unsaturated compounds, and other monomers copolymerizable with the (meth)acrylic acid monomer.

In the monomer components, which are raw materials of the above-mentioned acrylic copolymer, the (meth) acrylic acid, monomer is preferably one or two or more selected from acrylic acid, methacrylic acid, crotonic acid, citraconic acid, itaconic acid, maleic acid, maleic anhydride, and fumaric acid. Preferred examples of (meth)acrylic monomers other than the (meth)acrylic acid monomers include methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, isooctyl methacrylate, nonyl acrylate, nonyl methacrylate, isononyl acrylate, isononyl methacrylate, decyl acrylate, decyl methacrylate, dodecyl acrylate, dodecylmethacrylate, tridecyl acrylate, tridecyl methacrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, hydroxyethylmethacrylate, 2-hydroxypropylacrylate, 2-hydroxypropyl methacrylate, diallyl phthalate, triallyl cyanurate, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, diethylene glycol diacrylate, diethylene glycol dimethacrylate, allyl acrylate, allyl methacrylate, and salts or esterified products thereof. One or two or more of these may be used.

Preferred examples of the salts include metal salts, ammonium salts, and organic amine salts. Preferred examples of the metal salts include salts of monovalent alkali metals such as lithium, sodium, and potassium; divalent metals, e.g., alkaline-earth metals such as calcium and magnesium; and trivalent metals such as aluminum and iron. Preferred examples of the organic amine salts include alkanolamine salts such as an ethanolamine salt, a diethanolamine salt, and a triethanolamine salt; and a triethylamine salt.

The above-mentioned monomer components optionally contain other monomer(s) copolymerizable with the above-mentioned (meth)acrylic acid (salt) monomer. Examples thereof include: aromatic ring-containing unsaturated compounds such as divinylbenzene, styrene, α-methylstyrene, vinyltoluene, ethylvinylbenzene; and nitrogen-containing unsaturated compounds such as acrylonitrile, methacrylonitrile, acrylamide, methacrylamide, diacetone acrylamide, N-methylol acrylamide, N-methylol methacrylamide, N-methoxymethyl (meth)acrylamide, N-methoxyethyl (meth)acrylamide, N-n-butoxy methyl (meth)acrylamide, and N-i-butoxy methyl (meth)acrylamide. Among these, nitrogen-containing unsaturated compounds are preferable. Particularly preferred is acrylonitrile.

In the monomer components, which are raw materials for the above-mentioned acrylic copolymer, the (meth) acrylic monomer content is preferably 20% by mass or more in 100% by mass of all the monomer components. More preferably, the (meth)acrylic monomer content is 30% by mass or more.
Among the above-mentioned other copolymerizable ethylenically unsaturated monomer(s), the nitrogen-containing unsaturated compound content such as acrylonitrile, methacrylonitrile, acrylamide, methacrylamide, diacetone acrylamide, N-methylol acrylamide, N-methylol methacrylamide, N-methoxymethyl (meth)acrylamide, N-methoxy ethyl (meth)acrylamide, N-n-butoxy methyl (meth)acrylamide, and N-i-butoxy methyl (meth)acrylamide is 40% by mass or less in 100% by mass of all the monomer components. The nitrogen-containing unsaturated compound content is more preferably 20% by mass or less. The lower limit thereof is preferably 1% by mass, and more preferably 3% by mass.

In the emulsion composition for a vibration damper of the first embodiment of the present invention, it is preferable that the monomer components for forming the acrylic copolymer contain one or more polymerizable monomers each of which produces a homopolymer with a glass transition temperature of 0°C or less. More preferably, the monomer components contain two or more of such polymerizable monomers. Most preferably, monomer components to be used in each stage in multi-stage polymerization contain one polymerizable monomer which produces a homopolymer with a glass transition temperature of 0°C or less. Preferable examples of the polymerizable monomer which produces a homopolymer with a glass transition temperature of 0°C or less include butyl acrylate and 2-ethylhexyl acrylate.
Specifically, the monomer components for forming the emulsion particles which the emulsion composition of the first embodiment of the present invention contains preferably contain butyl acrylate and/or 2-ethylhexyl acrylate. When the monomer components contain butyl acrylate and/or 2-ethylhexyl acrylate, the damping in wide temperature range can be improved.
More preferably, the monomer components contain butyl acrylate and 2-ethylhexyl acrylate.

When the monomer components for forming the above acrylic copolymer contain butyl acrylate, the butyl acrylate content is preferably 10 to 60% by mass in 100% by mass of the monomer components for forming the acrylic copolymer. The butyl acrylate content is more preferably 20 to 50% by mass.
When the monomer components contain 2-ethylhexyl acrylate, the 2-ethylhexyl acrylate content is preferably 5 to 55% by mass in 100% by mass of the monomer components for forming the acrylic copolymer. The 2-ethylhexyl acrylate content is more preferably 10 to 50% by mass.
When the monomer components contain a combination of butyl acrylate 2-ethylhexyl acrylate, the content of a combination of butyl acrylate and 2-ethylhexyl acrylate is preferably 20 to 70% by mass in 100% by mass of the monomer components for forming the acrylic copolymer. The content of a combination of butyl acrylate 2-ethylhexyl acrylate is more preferably 30 to 60% by mass.

It is preferable that the monomer components for forming the above acrylic copolymer further contains less than 10% by mass of a functional group-containing unsaturated monomer in all the monomer components. The functional group of the functional group-containing unsaturated monomer is at least a functional group that can be crosslinked when the emulsion is prepared by polymerization. Such functions of the functional group allow improvements in film-forming property and heating and drying properties of the emulsion. The functional group-containing unsaturated monomer content is more preferably 0.1 to 3.0% by mass. The above-mentionedmass percent is relative to 100% by mass of all the monomer components.

Examples of the functional group of the above-mentioned functional group-containing unsaturated monomer include epoxy, oxazoline, carbodiimide, aziridinyl, isocyanate, methylol, vinyl ether, cyclocarbonate, and alkoxysilane. Any one or two or more of these functional groups may exit per molecule of the unsaturated monomer.

Examples of the functional group-containing unsaturated monomers include: polyfunctional unsaturated monomers such as divinylbenzene, ethylene glycol di(meth)acrviate, N-methoxymethyl (meth)acrylamide, N-methoxy ethyl (meth)acrylantide, N-n-butoxy methyl (meth)acrylamide, N-i-butoxy methyl (meth)acrylamide, N-methylol (meth)acrylamide, diallyl phthalate, diallyl terephtalate, polyethylene glycol di(meth)acrylate, propylene glycol di(meth)acrylate, polypropylene glycol di(meth) acrylate, tetramethylene glycol di(meth)acrylate, polytetramethylene glycol, di(meth)acrylate, 1,6-hexanediol di (meth) acrylate, and neopentyl glycol di(meth)acrylate; and glycidyl group-containing unsaturated monomers such as glycidyl (meth)acrylate and acrylic glycidyl ether. Among these, an unsaturated monomer containing two or more functional groups (polyfunctional unsaturated monomer) is preferably used. Any of these may be used alone, or two or more of these may be used in combination.

The glass transition temperature of the emulsion which the emulsion composition of the first embodiment of the present invention contains is preferably -20 to 30°C. This allows the resulting emulsion composition to exhibit higher damping in wide temperature range. The glass transition temperature is more preferably -10 to 20°C. The Tg of the emulsion may be determined based on already acquired knowledge, or may be controlled by the kind or content of the respective monomer components to be used. However, the Tg can be determined from the following calculation formula, theoretically.

$$\frac{1}{T_g}' = \left[ \frac{W_1'}{T_1} + \frac{W_2'}{T_2} + \cdots + \frac{W_n'}{T_n} \right]$$

in the formula, Tg' denoting a Tg (absolute temperature) of the emulsion;

$W_1'$, $W_2'$ and ... $W_n'$ each denoting a mass fraction of each monomer in all the monomer components; and

$T_1$, $T_2$, and ... $T_n$ each denoting a glass transition temperature (absolute temperature) of a homopolymer of each monomer component.

When two or more different acrylic copolymers are used as the above-mentioned acrylic copolymer, acrylic copolymers with different Tgs are preferably used. This difference in glass transition temperature. (Tg) between the copolymers allows exhibition of higher damping in wide temperature range, and particularly in a practical range from 20 to 60°C, the damping is markedly improved. In use of three or more different acrylic copolymers, at least two acrylic copolymers are different from each other in Tg, and the other one or more copolymers may have the same Tg as that of any of the two copolymers.

Out of the two acrylic copolymers with different Tgs, one having a higher Tg is defined as an "acrylic copolymer (1)" and the other having a lower Tg is defined as an "acrylic copolymer (2) ". In such a case, a difference in Tg between these acrylic copolymers (1) and (2) is preferably 10 to 60°C. When the difference is less than 10°C or is too large, the damping in a practical range may be insufficient. The Tg difference is more preferably 15 to 55°C, and still more preferably 20 to 50°C.

The acrylic copolymer (1) preferably has a glass transition temperature (Tg1) of -10°C or more and 50°C or less. The Tg1 is more preferably -5°C or more and 30°C or less, and still more preferably 0°C or more and 20°C or less, and most preferably 0°C or more and 15°C or less. This improves drying property of a Vibration damping coating film made from a coating material containing the emulsion composition of the first embodiment of the present invention, and therefore, expansion or cracks of the coating film surface is sufficiently suppressed. Specifically, a vibration damper with markedly excellent damping is formed. More preferably, the Tg1 is 5°C or more.

The acrylic copolymer (2) preferably has a glass transition temperature (Tg2) of -50°C or more and 10°c or less. The Tg2 is more preferably -20°C or more and 0°C or less.

The emulsion which the emulsion composition of the first embodiment of the present invention contains preferably has a weight average molecular weight of 20000to250000. If the weight average molecular weight is less than 20000, the damping may be insufficient, and the resulting emulsion composition for a Vibration damper may not exhibit excellent stability in the form of a coating material. If the weight average molecular weight is larger than 250000, for example, the two or more different acrylic copolymers may not be sufficiently compatible with each other, possibly failing to keep sufficient balance of the damping, and particularly in a range of 30 to 40°C, the damping may not be improved, and also, a coating material containing the resulting emulsion composition may show insufficient film-forming property at low temperature. The weight average molecular weight is preferably 30000 to 220000, and more preferably 40000 to 200000.

The weight average molecular weight can be determined in the above-mentioned manner.

The following will mention the second embodiment of the present invention.

The emulsion composition for a vibration damper of the second embodiment of present invention contains an emulsion (A) and a film-forming agent. The emulsion (A) has a glass transition temperature of -20 to 30°C, and has a weight average molecular weight of 20000 to 400000. The film-forming agent is a polymer (B) with a glass transition temperature higher than that of the emulsion (A) and a weight average molecular weight lower than that of the emulsion (A). The polymer (B) content is 0.5 to 10% by mass relative to 100% by mass of the emulsion (A). Thus according to an embodiment where the emulsion composition for a vibration damper of the present invention contains the emulsion (A) and the polymer (B) in a specific ratio, emulsion (A) having specified glass transition temperature and weight average molecular weight, the polymer (B) having a glass transition temperature higher than that of the emulsion (A) and having a weight average molecular weight lower than that of the emulsion (A), a Vibration damping formulation (in this description, also preferred to as a coating material), which essentially contains the emulsion composition for a Vibration damper of the present invention, can show sufficient basic performances such as damping, and also can sufficiently prevent sagging under the condition of high humidity and a thick film where sagging of the coating film tends to occur, for example, even after being applied on a vertical surface. As a result, workability and convenience in various applications of the vibration damping formulation are remarkably improved.

The reason why sagging of the coating film can be sufficiently presented even under the condition of high humidity or a thick film where the coating film tends to sag is because an undried coating film hardly sags because, for example, (1) interaction between resins (emulsion particles) in the vibration damping formulation becomes strong, which increases cohesion between the emulsion particles (it is considered that anti-sagging of an undried coating film is markedly improved by increase in cohesion between emulsion particles, not in cohesion between polymers, which is increased by addition of a common tackifier); (2) zero-share viscosity of the vibration damping formulation is increased, and the viscosity is changed (thixotropic viscosity is enhanced); and (3) adhesion (stockiness) of a base interface is increased.

Moreover, it is also considered that anti-sagging is exhibited because the polymer (B) functions as a tackifier to stickiness of the coating film. Common tackifiers have functions of providing fluidity and tackiness and improving stickiness, and this function generally does not act untie a coating film is dried. Unlike in the present invention, this function does not act for an undried coating film so that ant i-sagging of the undried coating film is sufficiently improved and less influenced by work environment about humidity. Further, the use of common tackifiers increases the glass transition temperature and decreases the viscosity, and then improves the stickiness, but since in the emulsion composition for a vibration damper of the present invention, the use of the polymer (B) increases the viscosity, it is not considered that the change in viscosity, caused due to use of common tackifiers, directly leads to the improvements in stickiness and anti-sagging of the emulsion composition for a vibration damper of the present invention. Further, in order to function as a tackifier and increase tackiness, about 10 to 30% by mass of a tackifier is generally added to 100% by mass of an emulsion. This addition amount is different from that of the polymer (B) in the emulsion composition for a vibration damper of the present invention.

Accordingly, it is clear that the effects of the present invention are exhibited because the polymer (B) shows functions different from those of common tackifiers.

Further, the result can be obtained in which the damping of the emulsion (A) is improved when the emulsion composition contains the polymer (B). In other words, as mentioned below, the polymer (B) is incorporated into the emulsion (A), whereby the effects of the present invention can be more enhanced.

In the present description, the glass transition temperature (Tg) of the emulsion (A) may be determined based on already acquired knowledge, or may be controlled by the kind or content of the respective monomer components to be used. However, the Tg can be determined from the above calculation formula, theoretically, which is preferably employed.

The glass transition temperature of the polymer (B) means a temperature at which polymer molecules start micro-Brownian motion, and can be determined by various methods. In the present invention, the glass transition temperature of the polymer (B) is defined as a temperature determined by a midpoint method in accordance with ASTM-D-3418 with a Differential Scanning Calorimetry (DSC). When a plurality of glass transition temperatures are observed, a main transition temperature at which an endothermic amount is larger is adopted in the present invention.

The glass transition temperature of the emulsion (A) of the present invention preferably has a lower limit of -10°C, and an upper limit of 20°C.

A glass transition temperature of less than -10°C or more than 20°C may lead to a failure to exhibit higher basic performances such as damping in wide temperature range.

In the emulsion (A), the weight average molecular weight preferably has a lower limit of 50000, and more preferably 100000.

The weight average molecular weight preferably has an upper limit of 300000, and more preferably 200000. A weight average molecular weight of less than 50000 or more than 300000 may lead to insufficient basic performances such as damping.

The weight average molecular weight can be determined under the same conditions as in the weight average molecular weight of the nonionic water-soluble polymer in the first embodiment mentioned above.

The average particle size of the emulsion particles of the emulsion (A) is the same as mentioned in the emulsion of the first embodiment of the present invention.

The pH of the emulsion (A) is preferably 2 to 10, more preferably 5 to 10, and still more preferably 7 to 10, for example. The pH of the emulsion can be adjusted by adding ammonia water, water-soluble amine, aqueous alkali hydroxide solution, or the like, into the emulsion.

In the present description, the PH can be determined with a pH meter. It is preferable that pH at 25°C is measured with a pH meter ("F-23", product of HORIBA, Ltd.).

The viscosity of the emulsion (A) is preferably 1 to 10000 mPa·s, and more preferably 5 to 2000 mPa·s, for example.

The viscosity can be determined under the conditions of 25°C and 20 rpm with a B type rotational viscometer.

Preferable embodiments of the monomer components, which are raw materials for the emulsion (A) and preferable embodiments of the production method of the emulsion (A) are as follows.

The polymer (B) preferably has a glass transition temperature of 50 to 120°C.

This allows the emulsion composition to more sufficiently exhibit the effects of the present invention, i.e., providing sufficient basic performances demanded in vibration dampers and markedly increasing anti-sagging.

The glass transition temperature preferably has a lower limit of 60°C and more preferably 65°C, and preferably has an upper limit of 110°C and more preferably 100°C.

Thepolymer (B) in the emulsion composition for a vibration damper of the present invention preferably has a glass transition temperature higher than that of the emulsion (A) by at least 50°C.

This allows the emulsion composition to more sufficiently exhibit the effects of the present invention, i.e., providing sufficient basic performances demanded in Vibration dampers and markedly improving anti-sagging.

The difference in glass transition temperature is more preferably at least 60°C, and still more preferably at least 80°C.

The polymer (B) preferably has a weight average molecular weight of 100 to 10000.

A weight average molecular weight of the polymer (B) of less than 100 or more than 10000 may lead to a failure to sufficiently exhibit the effect of the present invention, i.e., markedly improving anti-sagging. The weight average molecular weight more preferably has a lower limit of 500.

The weight average molecular weight can be determined in the above-mentioned manner.

The polymer (B) preferably has a thermal-softening temperature of 90 to 250°C. This allows the emulsion composition to more sufficiently exhibit the effects of the present invention, i.e., providing sufficient basic performances demanded in vibration dampers and markedly improving anti-sagging.

A thermal-softening temperature of less than 90°C may lead to insufficient basic performances as a vibration damper. The thermal-softening temperature has a lower limit of more preferably 100°C and still more preferably 120°C, and has an upper limit of more preferably 220°C and still more preferably 200°C.

It is preferable that the polymer (B) in the emulsion composition for a vibration damper of the present invention is a tackifier.

This allows the emulsion composition to more markedly exhibit the effects of the present invention, i.e., providing sufficient basic performances demanded in vibration dampers and significantly improving anti-sagging.

The above tackifier is, in the art which the present invention belongs to, an amorphous oligomer with several hundreds to thousands of molecular weights, and is found to improve cohesion (for example, see Japan Adhesive Tape Manufacturers Association, Adhesive Handbook Editorial Committee ed., "Adhesive Handbook", Third Edition, issued by Japan Adhesive Tape Manufactures Association, October 1, 2005, p. 54 to 55). Further, the tackifier can be added in water dispersions. The tackifier includes natural resin tackifiers and synthetic resin tackifiers, and among these, natural resin tackifiers are preferable. One or two or more of these may be used.

Examples of the natural resin tackifiers include rosin tackifiers and terpene tackifiers. Examples of the synthetic resin tackifiers include aliphatic petroleum resins, aromatic petroleum resins, and hydrogenated petroleum resins.

The rosin tackifiers include rosin and rosin derivatives such as hydrogenated rosin, heterogenated rosin, polymerized rosin, and esterified rosin. Examples of the rosin tackifiers include SUPER ESTERE-720, SUPERESTERE-788, SUPER ESTER NS-100H (trade name, products of Arakawa Chemical Industries, Ltd.), HARIESTER SK-90D-55, HARIESTER SK-508H, and HARIESTER SK-822E (trade name, products of Harima Chemicals, Inc.).

The terpene tackifiers include terpene resins such as $\alpha,\beta$-pinene, terpene phenol resins, aromatic modified terpene resins, hydrogenated resins, and the like. Examples of the terpene tackifiers include TAMANOL E-100 (trade name, product of Arakawa Chemical Industries, Ltd.) and YS Polyster-T-115 (trade name, product of YASUHARA CHEMICAL CO., Lid.).

Examples of the synthetic resin tackifiers include EMULSION AM-1002 (trade name, product of Arakawa Chemical Industries, Ltd.), I-MARV P-125 and I-MARV P-140 (trade name, products of Idemitsu Kosan Co., Ltd.). Other synthetic resin tackifiers include alkyl phenol resins, xylene resins, and cumarone-indene resins.

Thepolymer (B) content of the present invention preferably has a lower limit of 1% by mass. The polymer (B) content preferably has an upper limit of 8% by mass. The upper limit is more preferably 5% by mass, and still more preferably 3% by mass. This content is based on 100% by mass of the emulsion (A).

A polymer (B) content of less than 1% by mass may lead to insufficient anti-sagging. A polymer (B) content of more then 8% by mass may lead to insufficient damping in practical temperature range.

In the emulsion composition for a vibration damper of the present invention, the polymer (B) may be added to the emulsion (A), or alternatively the emulsion (A) may be added to the polymer (B). The polymer (B) may be incorporated in an emulsions polymer by being added during production (emulsion polymerization) of the emulsion (A).

According to one preferable embodiment of the emulsion composition for a Vibration damper of the present invention, for example, the polymer (B) is incorporated in the emulsion (A). This allows the emulsion composition to exhibit further improved damping and markedly excellent anti-sagging.

The reason for the improvement in damping is considered to be because the polymer (B) is incorporated into the emulsion (A), thereby being closely associated therewith, so that the effects of the polymer (B) for the emulsion (A) are more effectively exhibited.

The embodiment where the polymer (B) is incorporated into the emulsion (A) means an embodiment where when the emulsion (A) is prepared from monomers, the polymer (B) is added to a reaction solution for forming the emulsion (A) at an initial or middle stage of the polymerization. This embodiment does not mean a state where the emulsion (A) and the polymer (B) are mixed with each other just by adding the polymer (B) after completion of preparation of the emulsion (A), but means a state where the polymer (B) is made to coexist with the monomers for preparing the emulsion (A) as mentioned above, whereby the emulsion (A) and the polymer (B) are mixed with each other more sufficiently at molecular chain levels.

The pH and viscosity of the emulsion composition for a vibration of the second embodiment of the present invention are preferably the same as those of the emulsion composition for a vibration damper of the first embodiment mentioned above.

The monomer components, which are raw materials for the emulsion (A) of the second embodiment, are also the same as in the emulsion composition for a Vibration damper of the first embodiment mentioned above. When two or more different acrylic copolymers are used as the emulsion (A), their glass transition temperatures and a difference therebetween are also the same as those of the emulsion composition for a Vibration damper of the first embodiment mentioned above.

With respect each of the emulsions in the emulsion composition of the first embodiment and the emulsion in the emulsion composition of the second embodiment of the present invention, any one species may be used alone, or two or more species may be used. Such a copolymer generally exists in the form of a dispersion in a medium. Specifically, it is preferable that the above-mentioned emulsion composition for a vibration damper includes a medium and an emulsion dispersed therein. The medium is preferably an aqueous medium. Examples of such an aqueous medium include water, and mixed solvents of water and a water-miscible solvent. Among these, water is preferred in view of influences on environment and safety in application of a coating material containing the emulsion composition of the present invention.

It is preferable that the emulsion particles which the emulsion composition for a vibration damper of the present invention contains are core-shell emulsion particles. The emulsion in this embodiment allows the emulsion composition for a vibration damper of the present invention to exhibit more excellent effects of the present invention. The core-shell emulsion is excellent in damping in a wide range within practical temperature range. Particularly in high temperature range, the emulsion composition exhibits superior damping to Vibration damping formulations in other embodiments.

As a result, in practical temperature range, the damping performances can be exhibited over a wide range from normal temperature to high temperature.

Such a core-shell emulsion may have a homogeneous structure where the core and the shell are completely compatible with each other and therefore they can not be distinguished from each other or may have a core-shell composite structure or a microdomain structure where the core and the shell are not completely compatible with each other and inhomogeneously formed.

Among these structures, the core-shell composite structure is preferable in order to exploit emulsion's characteristics fully and produce a stable emulsion.

In the above-mentioned core-shell composite structure, it is preferable that the core surface is covered with the shell. In this case, preferably, the core surface is completely covered with the shell, but may not be completely covered therewith. For example, the core surface may be covered in a mesh pattern or covered to be partly exposed.

In the core-shell emulsion particles, a polymer that forms the core and a polymer that forms the shell are different from each other at least in any of various physical properties including, for example, weight average molecular weight, glass transition temperature, SP value (solubility coefficient), kind of monomers to be used, and content of monomers to be used. Among these, it is preferable that the two polymers are different in at least one of weight average molecular weight and glass transition temperature.

When the above-mentioned emulsion particles are core-shell emulsion particles, a difference in glass transition temperature between monomer components for forming the core and monomer components for forming the shell is preferably 10 to 60°C. If the difference in Tg is less than 10°C or more than 60°C, the damping in wide temperature region (20°C to 60°C) may not be obtained. The difference in Tg is more preferably 15 to 55°C, and still more preferably 20 to 50°C. It is preferable that the monomer components for forming the core have a Tg higher than that of the monomer components for forming the shell. Specifically, a core-shell emulsion is produced through multi-stage polymerization including polymerization of core emulsion, followed by polymerization of shell emulsion, and it is preferable that monomer components to be used in the prior step have a Tg higher than that of monomer components to be used in the latter step. Also when the emulsion is produced in three or more stages, it is preferable that monomer components to be used in a step have a Tg lower than that of monomer components to be used in a previous step.

In the above-mentioned core-shell emulsion particles, it is preferable that a ratio by mass of the monomer components for forming the core to the monomer components for forming the shell is 20/80 to 70/30. If the ratio by mass of the monomer components for forming the core is smaller than 20/80 or larger than 70/30, the damping in wide temperature range can not be obtained.

The above-mentioned emulsion is an aqueous emulsion in which a polymer obtainable by monomer components in the presence of an emulsifier is dispersed in a continuous phase, water. Generally, a vibration damper is formed by coating a vibration damping formulation that contains an emulsion composition for a vibration damper essentially containing such an emulsion, and optionally contains other additive(s) or solvent(s), and the like.

The above-mentioned core-shell emulsion particles can be prepared by below-mentioned emulsion polymerization (multi-stage polymerization).

When containing the above-mentioned acrylic copolymer emulsion, the emulsion composition for a vibration damper of the present invention contains only the acrylic copolymer emulsion, or may further contain other emulsion resin(s) mixed therewith.

Preferred examples of other emulsion resins(s) include emulsions of urethane resin, SBR resin, epoxy resin, vinyl acetate resin, vinyl chloride resin, vinyl chloride-ethylene resin, vinylidene chloride resin, styrene-butadiene resin, and acrylonitrile-butadiene resin. One or two or more species of these may be used.

In this case, the mass ratio between the acrylic copolymer emulsion and other emulsion resin(s) (acrylic copolymer emulsion/other emulsion resin(s)) is preferably set to be 100 to 50/0 to 50.

The emulsion that configures the emulsion composition for a vibration damper of the present invention is produced by polymerizing the monomer components by emulsion polymerization in the presence of an emulsifier. The embodiment of the emulsion polymerization is not especially limited. For example, the emulsion polymerization can be per formed by appropriately adding the monomer components, a polymerization initiator, and an emulsifier to an aqueous medium. A polymerization chain transfer agent and the like is preferably used for adjustment of molecular weight.

The emulsifier may be one or two or more selected from anionic, cationic, amphoteric surfactants, and polymeric surfactants.

For controlling the average particle size of the emulsion to the above-mentioned preferable range, preferred is a method including forming seed particles by adding some of the monomer components to an aqueous solvent such as water, and adding the rest of the monomer components to produce emulsion particles. The average particle size of the emulsion is influenced by the number of the seed particles in the aqueous medium. Therefore, the amount of the monomer components to be added to the aqueous medium for forming the seed particles is appropriately adjusted, whereby the number of the seed particles is controlled, and thus the average particle size of the emulsion can be adjusted to the above-mentioned preferable range.

A monomer emulsion including water, an emulsifier, and polymerizable monomers, which is directly charged into a polymerization reactor to form seed particles, is 0.5 to 10% by mass in the total mass of materials to be fed. According to one preferable method, only an emulsifier aqueous solution is directly charged into a polymerization reactor, and the solution is preferably 0.1 to 1.5% by mass based on emulsifier solids relative to the total mass of all the polymerizable monomers.

Further, it is important to control generation of particles so that no more particles are generated after preparation of the seed particles. For producing the above-mentioned emulsion whose particle size distribution is 5 to 40% as the emulsion that configures the emulsion composition for a vibration damper of the present invention, it is necessary to keep the reaction rate above a certain level. Specifically, part of the monomer emulsion is charged into a polymerization kettle, and initial polymerization reaction is allowed to proceed to prepare seed particles. The polymerization rate determined after completion of the initial reaction is preferably 80% or more, and more preferably 90% or more. The reaction rate can be determined by sampling 30 minutes after completion of the reaction process, and expressed as a rate of the measured solids content relative to a theoretical solids content calculated from a charged amount of starting materials used in the process.

Thus-obtained emulsion is in accordance with one preferable embodiment of the present invention.

The emulsion that configures the emulsion composition for a vibration damper of the present invention is preferably produced by a common emulsion polymerization method when it is a core-shell emulsion. Specifically, the emulsion is preferably produce by multi-stage polymerization in the presence of an emulsifier and/or a protective colloid, the multi-stage polymerization including emulsion-polymerizing monomer components in an aqueous medium to form a core and further emulsion-polymerizing monomer components with the core to form a shell. Thus, according to one preferable embodiment of the present invention, the emulsion that configures the emulsion composition for a vibration damper of the present invention is a core-shell emulsion, and the emulsion is obtainable by multi-stage polymerization including forming a core and then forming a shell.

Examples of the aqueous medium include, but not limited to, water, mixed solvents of water and one or more water-miscible solvents, and a mixture solvent containing water as a main component and such solvents. Among these, water is preferably used.

The minimum amount of the emulsifier is 0.1 to 10% by mass in the amount of all the polymerizable unsaturated bond-containing compounds to be used. If the emulsifier amount is less than 0.1% by mass, mechanical stability may be insufficiently improved, and further, polymerization stability may be insufficiently maintained. The minimum amount is preferably 0.5 to 5% by mass and most preferably 1 to 3% by mass.

Examples of the anionic surfactant include, but not limited to, polyoxyalkylene alkyl ether sulfates, sodium polyoxyalkylene oleyl ether sulfates, polyoxyalkylene alkyl phenyl ether sulfates, alkyldiphenyl ether disulfonates, polyoxyalkylene (mono, di, tri)styryl phenyl ether sulfates, polyoxylalkylene (mono, di, tri)benzyl phenyl ether sulfates, and alkenyl disuccinates; alkyl sulfates such as sodium dodecyl sulfate, potassium dodecyl sulfate, and ammonium alkyl sulfate; sodium dodecylpolyglycol ether sulfate; sodium sulforicinoate; alkyl sulfonates such as paraffin sulfonate; alkyl sulfonates such as sodium dodecylbenzene sulfonate, alkali metal sulfates of alkali phenol hydroxyethylene; higher alkyl naphthalene sulfonates; naphthalenesulfonic acid-formalin condensate; fatty acid salts such as sodium laureate, triethanol amine oleate, and triethanol amine abietate; polyoxyalkyl ether sulfates; polyoxyethylene carboxylate sulfates; polyoxyethylene phenyl ether sulfates; dialkyl succinate sulfonates; and polyoxyethylene alkyl aryl sulfates. Any one or two or more of these may be used.

Particularly preferable compounds as the above-mentioned anionic emulsifier are as follows: LATEMUL WX, LATEMUL 118B, PELEX SS-H, EMULGEN 1118S, EMULGEN A-60, B-66 (products of Kao Corp.), NEWCOL 707SF, NEWCOL 707SN, NEWCOL 714SF, NEWCOL 714SN (products of Nippon Nyukazai Co., Ltd.), and ABEX-26S, ABEX-2010, 2020 and 2030, DSB (products of Rhodia Nikka Co., Ltd.). Further, surfactants corresponding to these surfactants of nonionic type also can be used.

With respect to the anionic emulsifier, one or two ore more of reactive anionic surfactants, sulfosuccinate reactive anionic surface action, and alkenyl succinate reactive anionic surfactants may be used as a reactive emulsifier. Commercial items of the sulfosuccinate reactive anionic surfactants include LATEMUL S-120, S-120A, S-180 and S-180A (trade name, products of Kao Corp.), and ELEMINOL JS-2 (trade name, product of Sanyo Chemical Industries, Ltd.), and ADEKA-REASOAP SR-10, SR-20, SR-30 (trade name, products of ADEKA Corp.). LATEMUL ASK (trade name, product of Kao Corp.) is mentioned as a commercial item of the alkenyl succinate reactive anionic surfactants. Further, used may be polyoxyethylene (meth)acrylate sulfonates (for example, "ELEMINOL RS-30", product of Sanyo Chemical Industries, Ltd., "ANTOX MS-60", product of Nippon Nyukazai Co., Ltd.), allyl group-containing sulfates (salts) such as sulfonate salts of allyloxymethyl alkyloxy polyoxyethylene (for example, "AQUALON KH-10", product of DAI-ICHI KOGYO SEIYAKU CO., LTD.), and polyoxyalkylene alkenyl ether ammonium sulfate (for example, "LATEMUL PD-104", product of Kao Corp.).

With respect to the anionic emulsifier, the following surfactants and the like may be used as the reactive emulsifier.
Sulfoalkyl (C$_{1-4}$) esters of C$_{3-5}$ aliphatic unsaturated carboxylic acids, for example, sulfoalkyl (meth)acrylate such as sodium 2-sulfoethyl (meth)acrylate and ammonium 3-sulfopropyl (meth)acrylate; and alkyl sulfoalkyl diesters of aliphatic unsaturated dicarboxylic acids, such as sodium alkyl sulfopropylmaleate, ammmonium polyoxyethylene alkyl sulfopropylmaleate, and ammonium polyoxyethylene alkyl sulfoethylfumarate.

Examples of the nonionic surfactant include, but not limited to, polyoxyethylene alkyl ethers; polyoxyethylene alkylaryl ethers; sorbitan aliphatic esters; polyoxyethylene sorbitan aliphatic esters; aliphatic monoglycerides such as glycerol monolaurate; polyoxyethylene-oxypropylene copolymer; condensates of ethylene oxide with aliphatic amine, amide, or acid. Also used can be reactive nonionic surfactants such as allyloxymethyl alkoxy ethyl hydroxy polyoxyethylene (for example, "ADEKA-REASOAP ER-20", product of ADEKA Corp.); and polyoxyalkylene alkenyl ether (for example, "LATEMUL PD-420" and "LATEMUL PD-430", products of Kao Corp.). Any one or two or more of these may be used.

Examples of the cationic surfactants include, but not limited to, dialkyl dimethyl ammonium salts, ester type dialkyl ammonium salts, amide type dialkyl ammonium salts, and dialkylimidazolium salts. Any one or two or more of these may be used.

Examples of the amphoteric surfactants include, but not limited to, alkyl dimethyl amino acetic acid betaine, alkyl dimethyl amine oxide, alkyl carboxymethyl hydroxyethyl imidazolinium betaine, alkyl amide propyl betaine, and alkyl hydroxy sulfobetaine. Any one or two or more species of them may be used.

Examples of the polymeric surfactants include, but not limited to, polyvinyl alcohols and modified products thereof; (meth)acrylic water-soluble polymers; hydroxyethyl (meth)acrylic water-soluble polymers; hydroxypropyl (meth) acrylic water-soluble polymers; and polyvinyl pyrrolidone. Any one or two or more of these may be used.

Among the above-mentioned surfactants, non-nonylphenyl surfactants are preferably used in view of environment.

The amount of the above-mentioned surfactant may be appropriately determined depending on, for example, the kind of a surfactant to be used or the kind of monomer components to be used. For example, the amount of the surfactant is preferably 0.1 to 10 parts by weight, more preferably 0.5 to 5 parts by weight, and still more preferably 1 to 3 parts by weight relative to 100 parts by weight of all the monomer components for forming the emulsion.

Examples of the above-mentioned protective colloid include polyvinyl alcohols such as partially saponificated polyvinyl alcohols, completely saponificated polyvinyl alcohols, and modified polyvinyl alcohols; cellulose derivatives such as hydroxyethyl cellulose, hydroxypropyl cellulose, and carboxymethyl cellulose salt; natural polysaccharides such as Guar gum. Any one or two or more of these may be used. The protective colloid may be used alone or in combination with a surfactant.

The amounts of the protective colloid is appropriately set depending on use conditions. For example, the amount of the protective colloid is preferable 5 parts by weight or less, more preferably 3 parts by weight or less in 100 parts by weight of all the monomer components for forming the acrylic copolymer.

The above-mentioned polymerization initiator is not especially limited as long as it is a substance which is decomposed by heating to generate radical molecules. Water-soluble initiators are preferably used. Examples of water-soluble initiators include persulfates such as potassium persulfate, ammonium persulfate, and sodium persulfate; water-soluble azo compounds such as 2,2'-azobis(2-amidinopropane)dihydrochloride, and 4,4'-azobis(4-cyanopentanoic acid); thermal decomposition initiators such as hydrogen peroxide; redox polymerization initiators such as hydrogen peroxide and ascorbic acid, t-butyl hydroperoxide and rongalite, potassium persulfate and metal salt, and ammonium persulfate and sodium hydrogen sulfite. Any One or two or more of these may be used.

The amount of the polymerization initiator is not especially limited and is appropriately determined depending on the kind of the polymerization initiator, and the like. For example, the amount of the polymerization initiator is preferably 0.1 to 2 parts by weight, more preferably 0.2 to 1 parts by weight in 100 parts by weight of all the monomer for forming the acrylic copolymer.

In addition to the polymerization initiator, a reducing agent is optionally used to accelerate the emulsion polymerization. Examples of the reducing agent include reducing organic compounds such as ascorbic acid, tartaric acid, citric acid, and grape sugar; and reducing inorganic compounds such as sodium thiosulfate, sodium sulfite, sodium bisulfite, and sodium metabisulfite. Any one or two or more of these may be used.

The amount of the reducing agent is not especially limited, and preferably is, for example, 0.05 to 1 part by weight in 100 parts by weight of all the monomer components for forming the acrylic copolymer.

Examples of the polymerization chain transfer agent include, but not limited to, alkyl mercaptans such as hexyl mercaptan, octyl mercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; alkyl mercaptocarboxylates such as 2-ethylhexyl mercaptoacetate, 2-ethylhexyl mercaptopropionate, and tridecyl mercaptopropionate; alkoxy alkyl mercaptocarboxylates such as methoxybutyl mercaptoacetate and methoxybutyl mercaptopropionate; mercaptoalkyl carboxylates such as 2-mercaptoethyl octanoate; $\alpha$-methylstyrene dimer, terpinolene, $\alpha$-terpinene, $\gamma$-terpinene, dipentene, anisole, and allyl alcohol. Any one of these may be used alone, or two or more of these may be used in combination. Among these, preferred are alkylmercaptans such as hexylmercaptan, octylmercaptan, n-dodecylmercaptan, t-dodecylmercaptan, n-hexadecylmercaptan, and n-tetradecylmercatan. The amount of the polymerization chain transfer agent is generally 2.0 parts by weight or less, and preferably 1.0 part by weight or less in 100 parts by weight of all the monomer components.

The above-mentioned emulsion polymerization may performed, if necessary, in the presence of a chelating agent such as sodium ethylenediamine tetraacetate, a dispersant such as sodium polyacrylate, or an inorganic salt. The monomer components, the polymerization, initiator, and the like, may be added by any of en bloc addition, continuous addition, multi-stage addition, and the like. These addition methods may be appropriately employed in combination.

Regarding the emulsion polymerization condition in the above-mentioned production method, the polymerization temperature is not especially limited and preferably 0 to 100°C, and more preferably 40 to 95°C, for example. The polymerization time is not especially limited, and preferably 1 to 15 hours, and more preferably 5 to 10 hours, for example. The addition method of the monomer components, the polymerization initiator, and the like is not especially limited. Any of en bloc addition, continuous addition, multi-stage addition and the like may be employed. These addition methods may be appropriately employed in combination.

In the production method of the emulsion that configures the emulsion composition for a Vibration damper of the present invention, it is preferable that after the emulsion is produced by emulsion polymerization, the resulting emulsion is neutralized with a neutralize. As a result, the emulsion is stabilized. Examples of the neutralizer include, but not limited to, primary amines such as monoethanolamine, secondary amines such as diethanolamine, tertiary amines such as triethanolamine, dimethylethanolamine, diethylethanolamine, morpholine; ammonia water; sodium hydroxide. Any of these may be alone, or two or of these may be used in combination. Among these, volatile which will be evaporated off when a coating film is healed are preferred because they can give improved water resistance and the like to a coating film formed from a vibration damping formulation essentially containing the emulsion composition for a vibration damper. More preferably, amines with a boiling point of 80 to 360°C are used because they contribute to better heating and drying properties and improved damping. Such a neutralizer is preferably, for example, primary amines such as monoethanolamine, secondary amines such as diethanolamine, tertiary amines such as triethanolamine, dimethylethanolamine, diethylethanolamine, and morpholine. More preferably, amines with a boiling point of 130 to 280°C are used. The above boiling point is a boiling point at normal pressure.

When a neutralizer is used for preparing the emulsion composition for a vibration damper of the present invention, the amount of the neutralizer is preferably determined such that the neutralized carboxyl group-containing monomer content is 1.0 to 2.0% by mole in the number of moles of all the monomers. When the content of the neutralized carboxyl group in the number of moles of all the monomers is in such a range, the particle surface has sufficient water retention and the water retention is not increased, so that the coating film can exhibit excellent heating and drying properties. The neutralizer amount is more preferably determined such that the neutralized carboxyl group-containing monomer content is 1.5 to 2.0% by mole in the number of moles of all the monomers.

As mentioned above, when in the emulsion that configures the emulsion composition for a vibration damper of the present invention, the neutralized carboxyl group-containing monomer content in the monomer components for forming the emulsion is in a specific range, the resulting emulsion can provided the coating film with more excellent heating dying properties.

This emulsion composition for a vibration damper may be produced by synthesizing an emulsion, and then neutralizing the emulsion with the above-mentioned neutralizer such that the neutralized carboxyl group-containing monomer content in the number of moles of all the monomers is within the above-mentioned range, or may be produced by synthesizing an emulsion using monomer components that are previously determined so that the neutralized carboxyl group-containing monomer content is within the above-mentioned range.

When the number average molecular weight of the emulsion composition for a vibration damper of the present invention is small, the vibration damping formulation that contains the emulsion composition for a vibration damper of the present invention essentially containing the emulsion has improved dispersibility because compatibility between a filler such as inorganic powder filler and the emulsion is enhanced.

The emulsion composition for a vibration damper of the present invention can configure a vibration damping formulation, if necessary, together with other component(s). Such a vibration damping formulation essentially containing the emulsion composition for a vibration damper of the present invention can form an aqueous vibration damper capable of exhibiting excellent heating and drying properties and damping, or can show markedly excellent anti-sagging while achieving sufficient basic performances such as damping demanded in vibration dampers. The vibration damping formulation preferably has a solids content of 40 to 90% by mass in 100% by mass of the vibration damping formulation, for example, and more preferably 50 to 83% by mass, still more preferably 60 to 80% by mass, and most preferably 70 to 80% by mass. The vibration damping formulation preferably has a pH of 7 to 11, and more preferably 7 to 9. The content of the emulsion composition for a vibration damper in the vibration damping formulation is determined, for example, in such a way that the solids content of the emulsion composition for a vibration damper is preferably 10 to 60% by mass, and more preferably 15 to 55% by mass in 100% by mass of the solids of the vibration damping formulation.

Examples of the above-mentioned other components include solvent, plasticizer, stabilizer, thickener, wetting agent, antiseptic, foaming agent, foaming inhibitor, filler, coloring agent, dispersant, antirust pigment, defoaming agent, antioxidant, mildewproofing agent, ultraviolet absorber, and antistatic agent. Any one or two or more of these can be used. Among these, the emulsion composition preferably contains a filler.

The above-mentioned other components can be mixed with the above-mentioned emulsion composition, for a vibration damper and the like, for example, with a butterfly mixer, a planetary mixer, a spiral mixer, kneader, and a Dissolver.

The vibration damping formulation of the present invention preferably contains a foaming agent, a thickener, and a pigment among the above other components. Such a vibration damping formulation essentially containing the emulsion composition for a vibration damper of the present invention, a pigment, a foaming agent, and a thickener is also in accordance with one aspect of the present invention.

When the emulsion composition for a vibration damper in the first embodiment of the present invention is further added with a foaming agent, the resulting vibration damper has a uniform foaming structure and exhibits effects attributed to increase in its thickness and the like, which leads to sufficient heating and drying properties and high damping. Further, when the emulsion composition contains a thickener, the vibration damping formulation has a viscosity suitable in terms of coating. Further, the vibration damping formulation containing a foaming agent preferably contains a pigment, and this makes it possible to more sufficiently determine exhibition of the above-mentioned heating and drying properties and high damping

In addition, when the vibration damping formulation is prepared using the emulsion composition for a vibration damper in the first embodiment of the present invention, the nonionic water-soluble compound is preferably added shortly before or after addition of the emulsion. This allows the nonionic water-soluble compound to be present near the emulsion particles, and as a result, the vibration damping formulation can effectively exhibit its performances.

That is, the present invention also provides a vibration damping formulation essentially containing the emulsion composition for a vibration damper of the first embodiment of the present invention, wherein the vibration damping formulation is obtainable by adding and mixing the nonionic water-soluble compound shortly before or after addition of the emulsion.

The foaming agent is, for example, low-boiling hydrocarbon-containing thermal expansion microcapsules, organic foaming agents, and inorganic foaming agents. One or two or more of these may be used. Examples of the thermal expansion microcapsules include Matsumoto Microsphere F-30, F-50 (products of Matsumoto Yushi-Seiyaku Co., Ltd.); and EXPANCEL WU642, WU551, WU461, DU551, DU401 (product of Japan Expancel Co., Ltd.). Examples of the organic foaming agent include azodicarbonamide, azobisisobutyronitrile, N,N-dinitrosopentamethylenetetramine, p-toluenesulfonylhydrazine, and p-oxybis(benzenesulfohydrazide). Examples of the inorganic foaming agent include sodium bicarbonate, ammonium carbonate, and silicon hydride.

The vibration damping formulation of the present invention may be one which forms a vibration damping coating film by being dried by heating. When the emulsion composition contains a foaming agent, the resulting vibration damper has a uniform foaming structure and exhibits effects attributed to increase in its thickness and the like, which leads to sufficient heating and drying properties and high damping.

The foaming agent content is preferably 0.5 to 5.0 parts by weight, and more preferably 1.0 to 3.0 parts by weight in 100% by weight of the emulsion composition for a vibration damper.

The above-mentioned thickener is, for example, polyvinyl alcohols, cellulose derivatives, polycarboxylic acid resins, or the like. The thickener content is preferably 0.01 to 2 parts by weight, more preferably 0.05 to 1.5 parts by weight, and still more preferably 0.1 to 1 part by weight based on the solids content in 100 parts by weight of the solids of the emulsion composition for a vibration damper.

As the above-mentioned pigment, one or more species of the below-mentioned coloring agents, antirust pigments and the like may be used. The pigment content is preferably 50 to 700 parts by weight, and more preferably 100 to 550 parts by weight in 100 parts by weight of the emulsion composition for a vibration damper.

Examples of the above-mentioned solvent include ethylene glycol, butyl cellosolve, butyl carbitol, and butyl carbitol acetate. The solvent content is appropriately determined such that the solids content of the emulsion composition for a vibration damper in the vibration damping formulation is within the above-mentioned range.

Preferred examples of the above-mentioned aqueous cross-linking agent include oxazoline compounds such as EPOCROS WS-500, WS-700, K-2010, 2020, 2030 (trade name, products of NIPPON SHOKUBAI CO., LTD.); epoxy compounds such as ADEKA resin EMN-4-26-60, EM-101-50 (trade name, products of ADEKA Corp.); melamine compounds such as CYMEL C-325 (trade name, product of Mitsui Cytec Ind.); block isocyanate compounds; zinc oxide compounds such as AZO-50 (trade name, 50% by mass of zinc oxide aqueous dispersant, product of NIPPON SHOKUBAI CO., LTD.). The aqueous cross-linking agent content is preferably 0.01 to 20 parts by weight, more preferably 0.15 to 15 parts by weight, and still more preferably 0.5 to 15 parts by weight based on the solids content in 100 parts by weight of the solids of the emulsion composition for a vibration damper. The aqueous cross-linking agent may be added to the emulsion composition for a vibration damper, or may be added together with other component(s) upon preparation of the vibration damping formulation.

The addition of the cross-linking agent to the above-mentioned emulsion for a vibration damper or the above-mentioned vibration damping formulation can improve toughness of the resin. Thereby, sufficiently high damping is exhibited in high temperature range. Among these, oxazoline compounds are preferably used.

Examples of the filler include inorganic fillers such as calcium carbonate, kaolin, silica, talc, barium sulfate, alumina, iron oxide, titanium oxide, glass powder, magnesium carbonate, aluminum hydroxide, talc, diatomaceous earth, and clay; flaky inorganic fillers such as glass flakes and mica; and filamentous inorganic fillers such as metal oxide whiskers and glass fibers. The inorganic filler content is preferably 50 to 700 parts by weight, more preferably 100 to 550 parts by weight in 100 parts by weight of the solids of the emulsion composition for a vibration damper.

Examples of the coloring agent include organic or inorganic coloring agents such as calcium carbonate, titaniumoxide, carbon black, red iron oxide, Hansa yellow, benzine yellow, copper phthalocyanine blue, and quinacridone red.

Examples of the dispersant include inorganic dispersants such as sodium hexametaphosphate and sodium tripolyphosphate and organic dispersants such as polycarboxylic acid dispersants.

Examples of the antirust pigment include metal salts of phosphoric acid, molybdic acid, and boric acid.

Examples of the defoaming agent include silicone defoaming agent.

Polyvalent metal compounds may be further used as the above-mentioned other component(s). In this case, use of a polyvalent metal compound allows improvements in stability, dispersibility, and heating drying properties of the vibration damping formulation, and also in damping of a vibration damper made from the vibration damping formulation. Examples of the polyvalent metal compound include, but not limited to, zinc oxide, zinc chloride, and zinc sulfate. Any of one or two or more of these may be used.

The polyvalent metal compound may be in the form of powder, aqueous dispersion, emulsified dispersion, or the like. Among these, the polyvalent metal compound is preferably used in the form of aqueous dispersion or emulsified dispersion, more preferably in the form of emulsified dispersion because dispersibility in the vibration damping formulation is improved. The polyvalent metal compound content is preferably 0.05 to 5.0 parts by weight, more preferably 0.05 to 3.5 parts by weight in 100 parts by weight of the solids of the vibration damping formulation.

The damping of the vibration damping formulation can be evaluated by determining loss coefficient of a coating film formed from the vibration damping formulation. The loss coefficient is generally expressed as $\eta$, and is the most common index representing damping performances. Also in the present invention, the loss coefficient is suitable used for evaluating damping performances. A higher loss coefficient shows better damping performances. Further, it is preferable that the damping performances are influenced by temperature and are high in practical temperature range. In the present invention, since the practical temperature range of the coating film formed from the vibration damping formulation is usually 20 to 60°C, for example, it is suitable that the damping performances are evaluated based on the total loss coefficient at 20°C, 40°C, and 60°C. That is, the higher the total loss coefficient at 20°C, 40°C, and 60°C is, the better the practical damping performances are. Thus, the loss coefficient is useful as an index for evaluating the damping. The preferable range of the total loss coefficient at 20°C, 40°C, and 60°C is 0.200 or more. According to this invention, this value can be sufficiently achieves. According to one advantageous effects of the present invention, better basic performances such as damping and markedly excellent anti-sagging can be achieved, specifically, these performances can be all enhanced.

The total loss coefficient at 20°C, 40°C, and 60°C can be 0.220 or more in the present invention. The total loss coefficient is more preferably 0.240 or more, and still more preferably 0.260 or more.

The loss coefficient is commonly determined by a resonance method in which a loss coefficient at about the resonant frequency is measured, and may be determined by a half-width method, an attenuation factor method, and a mechanical impedance method. In the vibration damping formulation of the present invention, the loss coefficient of the coating film formed from the vibration damping formulation is preferably determined as follows. The vibration damping formulation is coated on a cold rolling steel plate (SPEC: 15 mm in width $\times$ 250 mm in length $\times$ 1. 5 mm in thickness to form a coating film having a surface density of 4.0 kg/m$^2$ The coating film is determined for loss coefficient by a resonance method (3dB method) using a cantilever method (product of ONO SOKKI CO., LTD., loss coefficient measurement system).

The Vibration formulation forms, for example, a coating film that serves as a vibration damper by being applied to a base and then dried. The base is not particularly limited. The vibration formulation can be applied to the base with brush, spatula, air spray, airless spray, mortar gun, texture gun, the like.

The amount of the vibration, damping formulation to be applied is appropriately determined on application, desired performances, and the like, but is preferably determined in such a way that the coating film during drying has a thickness of 0.5 to 8.0 mm, and more preferably 3.0 to 6.0 mm.

It is also preferable that the coating film during (after) drying has a surface, density of 1.0 to 7.0 kg/m$^2$ The surface density is more preferably 2.0 to 6. 0 kg/m$^2$. Use of the vibration damping formulation of the present invention makes it possible to obtain a coating film which hardly generates blisters or cracks during drying and hardly sags on an inclined surface.

Thus, one preferable embodiment of the present invention provides a method of applying the vibration damping formulation, including applying the vibration damping formulation in such a way that the composition forms a coating film that has a thickness of 0.5 to 8.0 mm after dried and then drying the composition or a method of applying the vibration damping formulation, including applying the vibration damping formulation in such a way that the composition forms a coating film that has a surface density of 2.0 to 6.0 kg/m$^2$ and then drying the composition. One preferable embodiment of the present invention provides a vibration damper obtainable by the above-mentioned application method of the vibration damping formulation.

Regarding the conditions where the vibration damping formulation is applied and then dried to form a coating film, the applied formulation may be dried by heating at normal temperature. The vibration damping formulation is preferably dried by heating in terms of efficiency because it is excellent in heating and drying properties. The temperature at which the composition is dried by heating is preferably 80 to 210°C, and preferably 110 to 180°C, and still preferably 120 to 170°C.

EFFECTS OF THE INVENTION

The emulsion composition for a vibration damper of the present invention is designed as described above and can exhibit excellent damping and also can suppress generation of swelling of a coating film even during drying by heating. Therefore the emulsion composition can efficiently form a coating film with excellent damping, and exhibit excellent anti-sagging under the condition of high humidity or a thick film, and can be preferably used beneath cabin floors of automobiles and also applied to rolling stock, ships, aircraft, electric machines, buildings, and construction machines, among other industrial uses.

BEST MODE FOR CARRYING OUT THE INTENTION

Hereinafter, the present invention is described in more detail based on examples, but is not limited only to these examples . The terms, "part" and "%" represent "part by weight" and "% by weight", respectively, unless otherwise specified.

In the following examples, various physical properties and the like are evaluated as follows.

<Tg>

Tg was determined from the above-mentioned Fox formula based on monomer composition used in each stage. Tg calculated from monomer compositions in all the stages was expressed as "total Tg."
Tgs of respective homopolymers, based on which the glass transition temperature (Tg) of polymerizable monomer components is calculated from the Fox formula, are as follows.
Styrene (St): 100°C
Methyl methacrylate (MMA): 105°C
2-ethylhexyl acrylate (2EHA): -70°C
Acrylic acid (AA): 95°C
Methacrylic acid (MAA): 130°C
n-butyl methacrylate (n-BMA): 20°C
Butyl acrylate (BA): -56°C

<Glass transition temperature. (Tg) of polymer (B)>

About 10 mg of the polymer (B) was subjected to thermal analysis under the conditions: a temperature increase rate of 10°C/min; and a nitrogen flow of 50 cc/min, using DSC (product of Rigaku Corp., device name: DSC-8230). The glass transition temperature (Tg) determined by a midpoint method in accordance with ASTM-D-3418

<Nonvolatile content (NV)>

The obtained aqueous resin dispersion about 1 g was weighed and dried in a hot air dryer at 110°C for 1 hour. Then, the residue after drying was weighed as a nonvolatile content and expressed as % by mass relative to the mass before drying.

<pH>

The pH was determined at 25°C with a pH meter ("F-23", product of HORIBA, Ltd.).

<Viscosity>

The viscosity was measured at 25°C and 20rpm with a B type rotary viscometer.

<Minimum film forming temperature (MFT)>

An obtained aqueous resin dispersion was coated on a glass plate placed on a heat gradient test apparatus using an applicator which gives a 0.2 mm thick film. Then, the coating film was dried and measured for temperature at which its surface cracked. The temperature was defined as a minimum film-formation temperature (MFT).

<Average particle size, particle size distribution>

The volume average particle size was measured by a dynamic light scattering method using a particle size distribution analyzer ("NICOMP Model 380", product of Particle Sizing System).
The distribution was determined by divining the Standard deviation by its volume average particle size (standard deviation/ volume average particle size $\times$ 100).

<Weight average molecular weight>

The weight average molecular weight was determined by GPC (gel permeation chromatography) under the following conditions. Measurement apparatus:HLC-8120 GPC (trade name, product of TOSOH CORP.)
Molecular weight column: serially connected TSK-GEL GMHXL-L and TSK-GEL G5000HXL (products of TOSOH CORP.)
Eluant: Tetrahydrofuran (THF)
Standard substance for calibration curve: Polystyrene (product of TOSOH CORP.)
Measurement method: A measurement object was dissolved in THE such that the solids content was about 0.2% by mass, and the mixture was filtered and the filtrate as a measurement sample was measured for molecular weight.

<Mechanical stability>

Pure water 30 g was added to a vibration damping formulation 100 g, and stirred and mixed enough. The resulting mixture was filtered through a 100 metal mesh, and the filtrate 70 g was subjected to mechanical stability test using Maron stability tester (produced by KUMAGAI RIKI KOGYO CO., LTD.) (according to JIS K6828:1996, platform scale 10 kg, disk rotation frequency 1000 min$^{-1}$, rotation time: 5 minutes, test temperature: 25°C). Immediately after completion of the test, the vibration damping formulation was filtered through a 100 metal mesh, and dried for 1 hour at 110°C in an oven. The resulting substance was determined for percentage of aggregation from the hollowing formula and evaluated.

```
Percentage of aggregation (%) = (mass (g) of metal mesh after
drying - mass (g) of metal mesh before drying)/70 (g) × 100
```

Evaluation Criteria

Excellent: less than 0.0001%
Good: 0.0001% or more and less than <0.001.%
Average: 0.001% or more and less than 0.01%
Poor: 0.01% or more and less than 0.1%

<Surface condition of dried coating film>

The prepared Vibration damping formulation applied with a thickness of 3 mm on a steel plate (trade name SPCC-SD with 75 mm in width $\times$ 150 mm in length $\times$ 0.8 mm in thickness, product of Nippon Testpanel Co., Ltd.). Then, the applied formulation was dried in a hot air dryer at 150°C for 30 minutes. The surface condition of the resulting coating film was evaluated based on the following criteria.

Evaluation Criteria

Good: No defects were observed.
Average: Cracks on the surface or interface were observed.
Poor: Coating film shape could not be maintained.

<Damping test>

The above-mentioned vibration damping formulation was applied with a thickness of 3 mm on a cold rolling steel plate (SPCC: 15 mm in width $\times$ 250 mm in length $\times$ 1.5 mm in thickness), and then dried at 150°C for 30 minutes to give a vibration damping coating film with a surface density of 4.0 kg/m$^2$. The coating film was determined for damping as follows: loss coefficients at respective temperatures (20°C, 40°C, and 60°C) were determined by a resonance method (3dB method) using a cantilever method (product of ONO SOKKI CO., LTD., loss coefficient measurement system). The damping was evaluated based on the total loss coefficient (a sum of loss coefficients at 20°C, 40°C, and 60°C). The larger the total loss coefficient is the better the damping is.

<Anti-sagging test>

The coating composition obtained above was applied with a wet thickness of 10 mm on a steel plate (ED steel plate) with 0.8 * 70 * 150 which was electroderposited with a cationic electrodeposition coating material ELECTRON "KG-400" produced by Kansai Paint Co., Ltd. This steel plate was stood vertically and left for 15 minutes at normal temperature and a relative humidity of 80%. The resulting coating film was observes by eyes and evaluated for anti-sagging.
In the present description, the thickness of an undried film is referred to as a wet thickness.

Evaluation Criteria

Distance (mm) collapsed by the coating material from the top end of the coating surface
Excellent: 0 mm or more and less than 3 mm
Good: 3 mm or more and less than 5 mm
Average: 5 mm or more and less than 10 mm
Poor: 10 mm or more

Preparation Example 1

A polymerization vessel equipped with a stirrer, a reflux condenser, a thermometer, a nitrogen inlet tube and a dropping funnel was filled with deionized water 300 parts. Then, the internal temperature was increased to 75°C under stirring and nitrogen flow. The above-mentioned dropping funnel was filled with a monomer emulsion composed of styrene 200 parts, methyl methacrylate 105 parts, 2-ethylhexyl acrylate 190 parts, acrylic acid 5 parts, t-dodecyl mercaptan 1 part, a previously adjusted 20% aqueous solution of NEWCOL 707SF (trade name, product of Nippon Nyukazai Co., Ltd., ammonium polyoxyethylene polycyclic phenyl ether sulfate) 90.0 parts deionized water 97 parts. While the internal temperature of the polymerization vessel was maintained at 80°C, the above-mentioned monomer emulsion 4 parts and a 5% solution of potassium persulfate 5 parts and a 2% aqueous solution of sodium hydrogen sulfite 10 parts were added to allow initial polymerization to proceed. After 20 minutes, the rest of the monomer emulsion was uniformly added dropwise for 120 minutes with the reaction system being maintained at 80°C. Simultaneously, a 5% aqueous solution of potassium persulfate 50 parts and a 2% aqueous solution of sodium hydrogen sulfite 50 parts were uniformly added dropwise for 120 minutes. After completion of the dropwise addition, the temperature was maintained for 60 minutes . The above-mentioned dropping funnel was filled with a monomer emulsion composed of styrene 105 parts, methyl methacrylate 100 parts, butyl acrylate 290 parts, acrylic acid 5 parts, t-dodecylmercaptan 1 part, a previously adjusted 20% aqueous solution of NEWCOL 707SF (trade name, product of Nippon Nyukazai Co., Ltd., ammonium polyoxyethylene polycyclic phenol ether sulfate)) 90.0 parts and deionized water 97 parts. The monomer emulsion was uniformly added dropwise into the reaction solution for 120 minutes. Simultaneously, a 5% aqueous solution of potassium persulfate 50 parts and a 2% aqueous solution of sodium hydrogen sulfite 50 parts were uniformly added dropwise for 120 minutes. After completion of the dropwise addition, the temperature was maintained for 90 minutes, and the polymerization was completed.
The resulting reaction solution was cooled to room temperature, and thereto, 2-dimethyl ethanol amine 10 parts was added to yield an emulsion for a vibration damper 1. The emulsion for a Vibration damper 1 had a nonvolatile content of 55%, a pH of 8.0, a viscosity of 200 mPa·s, a particle size of 320 nm, a particle size distribution of 22%, a weight average molecular weight of 92,000, a first-stage Tg of 10°C, a second-stage Tg of -10°C, and a total Tg of 0°C.

Preparation of emulsion composition for a vibration damper

Emulsion compositions for a Vibration damper 1 to 14 were prepared by adding a nonionic water-soluble compound to the emulsion 1. The prepared emulsion compositions were shown in Table 1.

Preparation of vibration damping formulation

Vibration damping formulations (Examples 1 to 11, Comparative Examples 1 to 3) were prepared using the emulsion compositions 1 to 14 in the following composition and then evaluated for mechanical stability, surface condition of dried coating film, and damping. Table 2 shows the results.

In Example 11, thickening and gelling occurred during preparation of the vibration damping formulation, which failed to evaluate the damping.

| | |
|---|---|
| Acrylic copolymer emulsion composition | 359 parts |
| Calcium carbonate NN#200[*1] | 620 parts |
| Dispersant AQUALIC DL-40S[*2] | 6 parts |
| Thickener ACRYSET WR-650[*3] | 4 parts |
| Defoaming agent NOPCO 8034L[*4] | 1 part |
| Foaming agent F-30[*5] | 6 parts |

*1: filler, product of NITTO FUNKA KOGYO K.K.
*2: specialty polycarboxylic acid dispersant (active ingredient 44%), products of NIPPON SHOKUBAI CO., LTD.
*3: alkali-soluble acrylic thickener (active ingredient 30%), product of NIPPON SHOKUBAI CO., LTD.
*4: defoaming agent (main ingredient: hydrophobic silicon + mineral oil), product of SAN NOPCO, Ltd.
*5: foaming agent, product of Matsumoto Yushi-Seiyaku Co. , Ltd.

[Table 1]

| Emulsion composition | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Emulsion 1 | | 100 | 100 | 100 | 100 | 100 | 100 | 100 | 100 | 100 | 100 | 100 | 100 | 100 | 100 |
| Nonionic water-soluble compound | Ethylene glycol | 3 | - | - | - | - | - | - | - | - | - | - | - | - | - |
| | PEG-200 | - | 3 | - | - | - | - | - | - | - | - | - | - | - | - |
| | PEG-400 | - | - | 3 | - | - | - | - | - | - | - | - | - | - | - |
| | PEG-1000 | - | - | - | 1 | 3 | 5 | 10 | 20 | - | - | - | - | 0.5 | 25 |
| | PEG-4000 | - | - | - | - | - | - | - | - | 3 | - | - | - | - | - |
| | PEG-6000 | - | - | - | - | - | - | - | - | - | 3 | - | - | - | - |
| | PEG-20000 | - | - | - | - | - | - | - | - | - | - | 3 | - | - | - |

PEG-200 (polyethylene glycol, Mw=200, product of ADEKA CORP.)
Peg-400 (polyethylene glycol, Mw=400, product of ADEKA CORP.)
PEG-1000 (polyethylene glycol, Mw=1000, product of ADEKA CORP.)
PEG-4000 (polyethylene glycol, Mw=3000, product of ADEKA CORP.)
PEG-6000 (polyethylene glycol, Mw=9000, product of ADEKA CORP.)
PEG-20000 (polyethylene glycol, Mw=20000, product of ADEKA CORP.)

[Table 2]

| | | | Example | | | | | | | | | | | Comparative Example | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 |
| Emulsion composition | | | 1 | 2 | 3 | 4 | 5 | 6 | 7 | 8 | 9 | 10 | 11 | 12 | 13 | 14 |
| Characteristics | Mechanical stability | | Good | Excellent | Excellent | Good | Excellent | Excellent | Excellent | Excellent | Excellent | Good | Poor | Good | Good | Good |
| | Surface condition of dried coating film | | Average | Average | Excellent | Good | Excellent | Excellent | Excellent | Good | Excellent | Good | Poor | Average | Good | Good |
| | Damping (loss coefficient) | 20°C | 0.089 | 0.100 | 0.092 | 0.096 | 0.092 | 0.082 | 0.078 | 0.062 | 0.089 | 0.098 | - | 0.097 | 0.095 | 0.058 |
| | | 40°C | 0.158 | 0.148 | 0.155 | 0.162 | 0. 161 | 0.151 | 0.141 | 0.124 | 0.158 | 0.152 | - | 0.156 | 0.154 | 0.117 |
| | | 60°C | 0.095 | 0.088 | 0.086 | 0.081 | 0.089 | 0.083 | 0.073 | 0.058 | 0.092 | 0.086 | - | 0.088 | 0.090 | 0.043 |
| | | Total loss coefficient[1] | 0.342 | 0.336 | 0.333 | 0.339 | 0.342 | 0.316 | 0.292 | 0.244 | 0.339 | 0.336 | - | 0.341 | 0.339 | 0.218 |
| 1) Sum of loss coefficients at 20°C, 40°C, and 60°C | | | | | | | | | | | | | | | | | |

Preparation example of emulsion (A)

Preparation Example 2

A polymerization vessel equipped with a stirrer, a reflux condenser, a thermometer, a nitrogen inlet tube and a dropping funnel was filled with deionized water 300 parts. Then, the internal temperature was increased to 75°C under stirring and nitrogen flow. The above-mentioned dropping funnel was filled with a first-stage monomer emulsion composed of styrene 200 parts, methyl methacrylate 105 parts, 2-ethylhexyl acrylate 190 parts, acrylic acid 5 parts, t-dodecylmercaptan0.4 parts, a previously adjusted 20% aqueous solution of NEWCOL 707SF (trade name, product of Nippon Nyukazai Co. , Ltd. , ammonium polyoxyethylene polycyclic phenyl ether sulfate) 90.0 pars and deionized water 97 parts. While the internal temperature of the polymerisation vessel was maintained at 80°C, the above-mentioned monomer emulsion 8 parts, a 5% aqueous solution of potassium persulfate 5 parts, and a 2% aqueous solution of sodium hydrogen sulfite 10 parts were added to allow initial polymerization to proceed. After 20 minutes, the rest of the monomer emulsion was uniformly added dropwise for 120 minutes with the reaction system being maintained at 80°C. Simultaneously, a 5% aqueous solution of potassium persulfate 50 parts and a 2% aqueous solution of sodium hydrogen sulfite 50 parts were uniformly added dropwise for 120 minutes. After completion of the dropwise addition, the temperature was maintained for 60 minutes. Next, the above-mentioned dropping funnel was filled with a second-stage monomer emulsion composed of styrene 105 parts, methyl methacrylate 100 parts, butyl acrylate 290 parts, acrylic acid 5 parts, t-dodecylmercaptan 0.4 parts, a previously adjusted 20% aqueous solution of NEWCOL 707SF (trade name, product of Nippon Nyukazai Co., Ltd., ammonium polyoxyethylene polycyclic phenyl ether sulfate) 90.0 parts and deionized water 97 parts. The monomer emulsion was uniformly added dropwise into the reaction mixture for 120 minutes. Simultaneously, a 5% aqueous solution of potassium persulfate 50 parts and a 2% aqueous solution of sodium hydrogen sulfate 50 parts were uniformly added dropwise for 120 minutes. After completion of the dropwise addition, the temperature was maintained for 90 minutes, and the polymerization was completed. The resulting reaction solution was cooled to room temperature, and thereto, 2-dimethyl ethanol amine 10 parts was added to yield an emulsion (A-1). The emulsion (A-1) had a nonvolatile content of 55%, a pH of 8.0, a viscosity of 420 mPa·s, a particle size of 230 nm, a particle size distribution of 22%, a weight average molecular weight of 170000, a first-stage Tg of 10°C, a second-stage Tg of -10°C, and a total Tg of 0°C.

Preparation Example 3

An emulsions (A-2) was produced by carrying out the same operations as in Preparation Example 2, except that the amount of each of the t-dodecyl mercaptan in the first-stage monomer emulsion and the t-dodecvl mercaptan in the second-stage monomer emulsion was changed into 4 parts. The emulsion (A-2) had a nonvolatile content of 56%, a pH of 7.9, a viscosity of 380 mPa·s, a particle size of 220 nm, a particle size distribution of 24%, a weight average molecular weight of 24000, a first-stage Tg of 10°C, a second-stage Tg of -10°C, and a total Tg of 0°C.

Preparation Example 4

An emulsion (A-3) was produced by carrying out the same operations as in Preparation Example 2, except that the amount of each of the t-dodecyl mercaptan in the first-stage monomer emulsion and the t-dodecyl mercaptan in the second-stage monomer emulsion was changed into 0.1 parts. The emulsion (A-3) had a nonvolatile content of 57%, a pH of 7.9, a viscosity, of 360 mPa·s, a particle size of 220 nm, a particle size distribution of 23%, a weight average molecular weight of 360000, a first-stage Tg of 10°C, a second-stage Tg of -10°C, and a total Tg of 0°C.

Preparation Example 5

An emulsion (A-4) was produced by carrying out the same operations as in Preparation Example 2, except that in the first-stage monomer emulsion, styrene 200 parts, methyl methacrylate 105 parts, 2-ethylhexyl acrylate 190 parts, and acrylic acid 5 parts were changed into styrene 185 parts, methyl methacrylate 90 parts, 2-ethylhexyl acrylate 220 parts, and acrylic acid 5 parts; and in the second-stage monomer emulsion, styrene 105 parts, methyl methacrylate 100 parts, butyl acrylate 290 parts, and acrylic acid 5 parts were changed into styrene 85 parts, methyl methacrylate 80 parts, butyl acrylate 330 parts, and acrylic acid 5 parts. The emulsion (A-4) had a nonvolatile content of 55%, a pH of 8.0, a viscosity of 340 mPa·s, a particle size of 215 nm, a particle size distribution of 21%, a weight average molecular weight of 170000, a first-stage Tg of 0°C, a second-stage Tg of -20°C, and a total Tg of -10°C.

Preparation Example 6

An emulsion (A-5) was produced by carrying out the same operations as in Preparation Example 2, except that in the first-stage monomer emulsion, styrene 200 parts, methyl methacrylate 105 parts, 2-ethylhexyl acrylate 190 parts, and acrylic acid 5 parts were changed into styrene 210 parts, methyl methacrylate, 120 parts, 2-ethylhexyl acrylate 165 parts, and acrylic acid 5 parts; and in the second-stage monomer emulsion, styrene 105 parts, methyl methacrylate 100 parts, butyl acrylate 290 parts, acrylic acid 5 parts were changed into styrene 120 parts, methyl methacrylate 120 parts, butyl acrylate 255 parts, and acrylic acid 5 parts. The emulsion (A-5) had a nonvolatile content of 55%, a pH of 8.0, a viscosity of 310 mPa·s, a particle size of 235 nm, a particle size distribution of 21%, a weight average molecular weight of 170000, a first-stage Tg of 20°C, a second-stage Tg of 0°C, and a total Tg of 10°C.

Preparation Example 7

An emulsions (A-6) was produced by carrying out the same operations as in Preparation Example 2, except that in the first-stage monomer emulsion, styrene 200 parts, methyl methacrylate 105 parts, 2-ethylhexyl acrylate 190 parts, and acrylic acid 5 parts were changed into styrene 170 parts, methyl methacrylate, 75 parts, 2-ethylhexyl acrylate 250 parts, and acrylic acid 5 parts; and in the second-stage monomer emulsion, styrene 105 parts, methyl methacrylate, 100 parts, butyl acrylate 290 parts, and acrylic acid 5 parts were changed into styrene 65 parts, methyl methacrylate 60 parts, butyl acrylate 370 parts, and acrylic acid 5 parts. The emulsion (A-6) had a nonvolatile content of 55%, a pH of 8.0, a viscosity of 330 mPa·s, a particle size of 230 nm, a particle size distribution of 22%, a weight average molecular weight of 170000, a first-stage Tg of -10°C, a second-stage Tg of -30°C, and a total Tg of -20°C.

Preparation Example 8

An emulsion (A-7) was produced by carrying out the same operations as in Preparation Example 2, except that in the first-stage monomer emulsion, styrene 200 parts, methyl methacrylate 105 parts, 2-ethylhexyl acrylate 190 parts, and acrylic acid 5 parts were changed into styrene 220 parts, methyl methacrylate 135 parts, 2-ethylhexyl acrylate 140 parts, and acrylic acid 5 parts; and in the second-stage monomer emulsion, styrene 105 parts, methyl methacrylate 100 parts, butyl acrylate 290 parts, and acrylic acid 5 parts were changed into styrene 133 parts, methyl methacrylate 140 parts, butyl acrylate 222 parts, and acrylic arid 5 parts. The emulsion (A-7) had a nonvolatile content of 55%, a pH of 8.0, a viscosity of 310 mPa·s, a particle size of 230 nm, a particle size distribution of 23%, a weight average molecular weight of 170000, a first-stage Tg of 30°C, a second-stage Tg of 10°C, and a total Tg of 20°C.

Preparation Example 9

An emulsion (A-8) was prepared by carrying out the same operations as in Preparation Example 2, except that the amount of each of the t-dodecyl mercaptan in the first-stage monomer emulsion and the t-dodecyl mercaptan in the second-stage monomer emulsion in Preparation Example 2 was changed into 8 parts. The emulsion (A-8) had a nonvolatile content of 57%, a pH of 7.8, a viscosity of 330 mPa·s, a particle size of 220 nm, a particle size distribution of 21%, a weight average molecular weight of 18000, a first-stage Tg of 10°C, a second-stage Tg of -10°C, and a total Tg of 0°C.

Preparation Example of polymer (B)

Preparation Example 10

A polymerization vessel equipped with a stirrer, a reflux condenser, a thermometer, a nitrogen inlet tube and a dropping funnel was filled with deionized water 300 parts. Then, the internal temperature was increased to 85° under stirring and nitrogen flow. The above-mentioned dropping funnel was filled with a first-stage monomer emulsion composed of methyl methacrylate 900 parts, 2-ethylhexyl acrylate 40 parts, butyl acrylate 50 parts, acrylic acid 1 part, t-dodecylmercaptan 8 parts, a previously adjusted 20% aqueous solution of NEWCOL 707SF (trade name, product of Nippon Nyukazai Co., Ltd., ammonium polyoxyethylene polycyclic phenyl ether sulfate) 180.0 parts, and deionized water 194 parts. While the internal temperature of the polymerization vessel was maintained at 80°C, the above-mentioned monomer emulsion 8 parts, a 5% aqueous solution of potassium -persulfate 5 parts, and a 2% aqueous solution of sodium hydrogen sulfite 10 parts were added to allow initial polymerization to proceed. After 20 minutes, the rest of the monomer emulsion was uniformly added dropwise for 120 minutes with the reaction system being maintained at 80°C. Simultaneously, a 5% aqueous solution of potassium persulfate 100 parts and a 2% aqueous solution of sodium hydrogen sulfite 100 parts were uniformly added dropwise for 120 minutes. After completion of the dropwise addition, the temperature was maintained for 60 minutes, and the polymerization was completed. The resulting reaction solution was cooled to room temperature, and whereto, 2-dimethyl ethanol amines 1 part was added to yield a polymer (B-1). The polymer (B-1) had a nonvolatile content of 55%, a pH of 7.2, a viscosity of 120 mPa·s, a particle size of 190 nm, a particle size distribution of 20%, a weight average molecular weight of 17000, and a Tg of 80°C.

Preparation Example of polymer (A+B)

Preparation Example 11

A polymerization vessel equipped with a stirrer, a reflux condenser, a thermometer, a nitrogen inlet tube and a dropping funnel was filled with deionized water 300 parts. Then, the internal temperature was increased to 75°C under stirring and nitrogen flow. The above-mentioned dropping funnel was filled with a first-stage monomer emulsion composed of styrene 200 parts, methyl methacrylate 105 parts, 2-ethylhexyl acrylate 190 parts, acrylic acid 5 parts, t-dodecylmercaptan 0.4 parts, PENSELD-160 (trade name, rosin resin, Tg: 87°C, weight average molecular weight: 2400, product of Arakawa Chemical Industries, Ltd.) 20 parts, a previously adjusted 20% aqueous solution of NEWCOL 707SF (trade name, product of Nippon Nyukazai Co., Ltd., ammonium polyoxyethylene polycyclic phenyl ether sulfate) 90 parts and deionized water 97 parts. While the internal temperature of the polymerization vessel was maintained at 80°C, the above-mentioned monomer emulsion 8 parts, a 5% aqueous solution of potassium persulfate, 5 parts, and a 2% aqueous solution of sodium hydrogen sulfite 10 parts were added to allow initial polymerization to proceed. After 20 minutes, the rest of the monomer emulsion was humogeneously uniformly added dropwise for 120 minutes with the reaction system being maintained at 80°C. Simultaneously, a 5% aqueous solution of potassium persulfate 50 parts and a 2% aqueous solution of sodium hydrogen sulfite 50 parts were uniformly added dropwise for 120 minutes. After completion off the dropwise addition, the temperature was maintained for 60 minutes.
Next, the above-mentioned dropping funnel was filled with a second-stage monomer emulsion composed of styrene 105 parts, methyl methacrylate 100 parts, butyl acrylate 290 parts, acrylic acid 5 parts, t-dodecylmercaptan 0.4 parts, PENCEL D-160 20 parts, a previously adjusted 20% aqueous solution of NEWCOL 707SF (trade name, product of Nippon Nyukazai Co., Ltd., ammonium polyoxyethylene polycyclic phenyl ether sulfite) 90.0 parts and deionized water 97 pats. The second-stage monomer emulsion was uniformly added dropwise for 120 minutes. Simultaneously, a 5% aqueous solution of potassium persulfate 50 parts and a 2% aqueous solution of sodium hydrogen sulfite 50 parts were uniformly added dropwise for 120 minutes. After completion of the dropwise addition, the temperature was maintained for 90 minutes, and the polymerization was completed. The resulting reaction solution was cooled to room temperature, and thereto, 2-dimethyl ethanol amine 10 parts was added to yield an emulsion (AB-1). The emulsion (AB-1) had a nonvolatile content of 57%, a pH of 8.1, a viscosity of 620 mPa·s, a particle size of 220 nm, a particle size distribution of 20%, a weight average molecular weight of 180000, a first-stage Tg of 10°C, a second-stage Tg of -10°C, and a total Tg of 0°C.

Preparation Example 12

An emulsion (AB-2) was prepared by carrying out the same operations as in Preparation Example 11, except that in the first-stage monomer emulsion, styrene 200 parts, methyl methacrylate 105 parts, 2-ethylhexyl acrylate 190 parts, acrylic acid 5 parts, t-dodecyl mercaptan 0.4 parts, and PENCEL D-160 20 parts were changed into styrene 200 parts, methyl methacrylate 105 parts, 2-ethylhexyl acrylate 190 parts, acrylic acid 5 parts, t-dodecyl mercaptan 0.4 parts, and PEIIFEL D-160 40 parts; and in the second-stage monomer emulsion, styrene 105 parts, methyl methacrylate 100 parts, butyl acrylate, 290 parts, acrylic acid 5 parts, t-dodecyl mercaptan 0.4 parts, and PENCEL D-160 20 parts were changed into styrene 105 parts, methyl methacrylate, 100 parts, butyl acrylate 290 parts, acrylic acid 5 parts, t-dodecyl mercaptan 0.4 parts, and PENCEL D-160 40 parts. The emulsion (AB-2) had a nonvolatile content of 59%, a pH of 8.0, a viscosity of 680 mPa·s, a particles size of 240 nm, a particle size distribution of 21%, a weight average molecular weight of 190000, a first-stage Tg of 10°C, a second-stage Tg of -10°C, and a total Tg of 0°C.
In Preparation Example 11 and 12, PENCEL D-160 corresponds to the polymer (B), and the polymer prepared through the two-stage polymerization of the above-mentioned monomers corresponds to the emulsion (A).

Composition of Vibration damping formulation,

Example 12

A vibration damping formulation was prepared using the base emulsion (A) (two-stage-polymerized acrylic emulsion, Tg: 0°C, weight average molecular weight [Mw]: 170000) in the following composition and then evaluated for anti-sagging and damping. Table 3 shows the results.

| Emulsion (A) | 359 parts |
| Polymer (B) HARVESTER SK-822E[*1] | 1.8 parts |
| Calcium carbonate NN#200[*2] | 620 parts |
| Dispersant AQUATIC DL-40S[*3] | 6 parts |
| Thickener ACRYSET WR-650[*4] | 4 parts |
| Defoaming agent NOPCO 8034L[*5] | 1 part |
| Foaming agent F-30[*6] | 6 parts |

*1: product of Harima Chemicals, Inc., tackifier (Tg: 90°C, weight average molecular weight: 4900)
*2: pigment, product of NITTO FUNKA, KOGYO K.K.
*3: specialty polycarboxylic acid dispersant (active ingredient 44%), product of NIPPON SHOKUBAI CO., LTD.
*4: alkali-soluble acrylic thickened (active ingredient 30%), of NIPPON SHOKUBAI CO., LTD.
*5: deforming agent (main ingredient: hydrophobic silicon + mineral oil), product of SAN NOPCO, Ltd.
*6: foaming agent, product of Matsumoto Yushi-Seiyaku Co., Ltd.

Examples 13 to 25

Vibration damping formulations were prepared in the same manner as in Example 12 except that the kind and amount of the emulsion (A) and those of the polymer (B) were changed as shown in Table 3, and evaluated for anti-sagging and damping. The amounts of the calcium carbonate, the dispersant, the thickener, the defoaming agent, and the foaming agent were determined such that the respective amounts relative to the emulsion (A) were the same as in Example 12. Table 3 shows the results.

Examples 26 and 27

Vibration damping formulations were prepared in the same manner as in Example 12 except that the polymer (A+B) was used instead of the emulsion (A) and the polymer (B) and the kind and amount thereof were changed as shown in Table 3. The resulting formulations were evaluated for anti-sagging and damping. The amounts of the calcium carbonate, the dispersant, the thickener, the defoaming agent, and the foaming agent were determined such that the respective amounts relative to the polymer (A+B) were the same as those relative to the amount of a combination of the emulsion (A) and the polymer (B) in Example 12. Table 3 shows the results.
In Tables, SK-822E represents the above-mentioned "HARIESTER SK-822E"; E-720 represents rosin tackifiers "SUPPER ESTERE-720" (trade name, product of Arakawa Chemical Industries, Ltd., Tg: 65°C, weight average molecular weight: 700); E-788 represents rosin tackifier "SUPER ESTER E-788" (trade name, product of Arakawa Chemical Industries, Ltd. , Tg: 87°C, weight average molecular weight: 2400); and E-100 represents terpene tackifier "TAMANOL E-100" (trade name, product of Arakawa Chemical Industries, Ltd., Tg: 85°C, weight average molecular weight: 900).
[Table 3]

| | | Example 12 | Example 13 | Example 14 | Example 15 | Example 16 | Example 17 | Example 18 | Example 19 | Example 20 | Example 21 | Example 22 | Example 23 | Example 24 | Example 25 | Example 26 | Example 27 |
|---|---|---|---|---|---|---|---|---|---|---|---|---|---|---|---|---|---|
| Emulsion (A) | A-1 | 100 | 100 | 100 | 100 | 100 | 100 | 100 | 100 | – | – | – | – | – | – | – | – |
| | A-2 | – | – | – | – | – | – | – | – | 100 | – | – | – | – | – | – | – |
| | A-3 | – | – | – | – | – | – | – | – | – | 100 | – | – | – | – | – | – |
| | A-4 | – | – | – | – | – | – | – | – | – | – | 100 | – | – | – | – | – |
| | A-5 | – | – | – | – | – | – | – | – | – | – | – | 100 | – | – | – | – |
| | A-6 | – | – | – | – | – | – | – | – | – | – | – | – | 100 | – | – | – |
| | A-7 | – | – | – | – | – | – | – | – | – | – | – | – | – | 100 | – | – |
| | A-8 | – | – | – | – | – | – | – | – | – | – | – | – | – | – | – | – |
| Polymer (B) | SK-822E | 0.5 | 1 | 3 | 3 | – | – | 10 | – | 3 | – | – | – | – | – | – | – |
| | E-720 | – | – | – | – | – | – | – | – | – | 3 | 3 | 3 | – | – | – | – |
| | E-788 | – | – | – | – | 3 | 3 | – | – | – | – | – | – | 3 | – | – | – |
| | E-100 | – | – | – | – | – | – | – | – | – | – | – | – | – | 3 | – | – |
| | B-1 | – | – | – | – | – | – | – | 3 | – | – | – | – | – | – | – | – |
| Polymer (A+B) | AB-1 | – | – | – | – | – | – | – | – | – | – | – | – | – | – | 100 | – |
| | AB-2 | – | – | – | – | – | – | – | – | – | – | – | – | – | – | – | 100 |
| Anti-sagging test | | Average | Excellent | Excellent | Excellent | Excellent | Good | Excellent | Average | Good | Excellent | Good | Excellent | Average | Excellent | Excellent | Excellent |
| Damping evaluation (loss coefficient) | 20°C | 0.078 | 0.072 | 0.069 | 0.071 | 0.075 | 0.060 | 0.062 | 0.082 | 0.078 | 0.065 | 0.088 | 0.032 | 0.098 | 0.010 | 0.083 | 0.085 |
| | 40°C | 0.139 | 0.142 | 0.141 | 0.152 | 0.159 | 0.139 | 0.140 | 0.140 | 0.148 | 0.149 | 0.131 | 0.115 | 0.075 | 0.082 | 0.163 | 0.172 |
| | 60°C | 0.078 | 0.075 | 0.078 | 0.086 | 0.092 | 0.072 | 0.088 | 0.068 | 0.072 | 0.082 | 0.046 | 0.105 | 0.016 | 0.106 | 0.096 | 0.099 |
| Total (20°C+40°C+60°C) | | 0.295 | 0.289 | 0.288 | 0.309 | 0.326 | 0.271 | 0.290 | 0.290 | 0.298 | 0.296 | 0.265 | 0.252 | 0.189 | 0.198 | 0.342 | 0.356 |

Comparative Examples 4 and 5

Vibration damping formulation where prepared in the same manner as in Example 12, except that the kind and amount of the emulsion (A) and those of the polymer (B) were changed as shown in Table 4. The resulting formulations were evaluated for anti-sagging and damping. The amounts of the calcium carbonate, the dispersant, the thickener, the defoaming agent, and the foaming agent were determined such that the respective amounts relative to the emulsion (A) were the same as in Example 12. Table 4 shows the results.

[Table 4]

| | | Comparative Example 4 | Comparative Example 5 |
|---|---|---|---|
| Emulsion (A) | A-1 | 100 | - |
| | A-2 | - | - |
| | A-3 | - | - |
| | A-4 | - | - |
| | A-5 | - | - |
| | A-6 | - | - |
| | A-7 | - | - |
| | A-8 | - | 100 |
| Polymer (B) | SK-822E | - | 3 |
| | E-720 | - | - |
| | E-788 | - | - |
| | E-100 | - | - |
| | B-1 | - | - |
| Polymer (A+B) | AB-1 | | |
| | AB-2 | | |
| Anti-sagging test | | × | × |
| Damping evaluation (loss coefficient) | 20°C | 0.081 | 0.081 |
| | 40°C | 0.144 | 0.141 |
| | 60°C | 0.063 | 0.052 |
| Total (20°C+40°C+60°C) | | 0.288 | 0.274 |

Examples 1 to 11 and Comparative Examples 1 to 3 mentioned above prove the following significance of critical range of numerical limitation in the emulsion composition for a vibration damper of the first embodiment of the present invention. Specifically, it was found that the emulsion composition for a vibration damper, when containing 1 to 20% by mass of the nonionic water-soluble compound in 100% by mass of the emulsion composition, could achieve excellent mechanical stability and better surface conditions of a dried coating film, and could exhibit excellent damping in wide temperature range. The significance of critical range of the lower limit of the nonionic water-soluble compound content is clarified by a comparison between Example 4 and Comparative Examples 13 and 14 where the nonionic water-soluble compound content is below the lower limit. In Example 4, the composition was excellent in each of the mechanical stability, the surface condition of the dried coating film, and the damping in wide temperature range. In contrast, in Comparative Examples 2 and 3, the surface condition of the dried coating film and the damping were poor, respectively. An emulsion composition for a vibration damper, which is excellent in all the three characteristics like the one in Example 4, is recognized as being much superior in performances to the compositions in Comparative Examples. Such effects, specifically, allowing an emulsion composition for a vibration damper and a vibration damper made from a vibration damping formulation to show markedly excellent performances, are outstanding effects.

In Examples 1 to 11 and Comparative Examples 1 to 3, the emulsions were prepared by polymerizing the monomer components containing the (meth)acrylic monomer. In these emulsions, a problem in which swelling occurs during drying of a coating film is caused through the same mechanism as long as they are emulsions which can form a vibration damper by coating. Accordingly, the emulsion compositions for a vibration damper certainly exhibit the advantageous effects of the present invention when containing 1 to 20% by mass of the nonionic water-soluble compound in 100% by mass of the emulsion composition. At least when the acrylic emulsion obtainable by polymerizing the monomer components essentially containing the (meth)acrylic monomer was used, the advantageous effects of the present invention are sufficiently proven and the technical meaning of the present invention are supported in Examples 1 to 11 and Comparative Examples 1 to 3.

The above-mentioned Examples 12 to 27 and Comparative Examples 4 and 5 show the following significance of critical range of numerical limitation in the emulsion composition for a vibration damper of the second embodiment of the present invention. Specifically, it was found that the advantageous effects in damping and anti-sagging are markedly exhibited when the emulsion composition for a vibration damper has a glass transition temperature of -20 to 30°C, and contains the emulsion (A) and the polymer (B), the emulsion (A) having a weight average molecular weight of 20000 to 400000, the polymer (B) having a glass transition temperature higher than that of the emulsion (A) and having a weight average molecular weight lower than that of the polymer (B), the polymer (B) content being 0.5 to 10% by mass relative to 100% by mass of the emulsion (A).

The significance of critical range of the lower limit of the weight average molecular weight of the emulsion (A) is clarified by a comparison between Example 20 and Comparative Example 5 where the weight average molecular weight is below the lower limit. In Example 20, the vibration damping formulation was evaluated to be good in the anti-sagging test, and had the total loss coefficient of 0.298 in the damping evaluation. In contrast, in Comparative Example 5, the vibration damping formulation was evaluated to be poor in the anti-sagging test, and had the total loss coefficient of 0.274 in the damping evaluation. In Example 9, the performance as an emulsion composition for a vibration damper or a vibration damper made from a vibration damping formulation can be found to be markedly superior to those in Comparative Example 5. It is obvious that such effects, specifically, allowing an emulsion composition for a vibration damper (for use in a vibration damper), and a vibration damping formulation to show markedly excellent performances, are outstanding effects. In Examples other than Examples 20 and 21, the weight average molecular weight was 170000, and in these Examples, the effects of the present invention are more remarkably exhibited.

The technical meanings of the upper and lower limits of the other numerical ranges are clarified by Examples 12 to 27 where the anti-sagging and the damping are excellent within the ranges. It is obvious that such effects, specifically, allowing an emulsion composition for a vibration damper and a vibration damping formulation to show markedly excellent performances, are outstanding effects.

In the above-mentioned Examples 12 to 27 and Comparative Examples 4 and 5, the emulsions were prepared by polymerizing the monomer components containing the (meth)acrylic monomer. In these emulsions, a problem in which sagging occurs in an undried coating film is caused through the same mechanism as long as they are emulsions which can form a vibration damper by coating. Accordingly, the emulsion compositions for a vibration damper certainly exhibit the advantageous effects of the present invention when containing 0.5 to 10% by mass of the polymer (B) relative to the emulsion (A). At least when the acrylic emulsion obtainable by polymerizing the monomer components essentially containing (meth)acrylic monomer was used, the advantageous effects of the present invention were fully proven and the technical meaning of the present invention was supported by Examples 12 to 27 and Comparative Examples 4 and 5.

**Claims**

1. An emulsion composition for a vibration damper, comprising an emulsion obtainable by emulsion polymerization of monomer components,
   wherein the emulsion composition contains 0.5 to 20% by mass of a film-forming agent with a weight average molecular weight of 100 to 20000 in 100% by mass of the emulsion composition.

2. The emulsion composition for a vibration damper according to Claim 1,
   wherein the emulsion composition contains, as the film-forming agent, 1 to 20% by mass of a nonionic water-soluble compound in 100% by mass of the emulsion composition.

3. The emulsion composition for a vibration damper according to Claim 1 or 2,
   wherein the nonionic water-soluble compound is a nonionic water-soluble polymer with a weight average molecular weight of 400 to 10000.

4. The emulsion composition for a vibration damper according to any one of Claims 1 to 3,
   wherein the nonionic water-soluble polymer is at least one selected from the group consisting of polyethylene glycol, polyvinyl alcohol, polyvinyl pyrrolidone, methyl cellulose, and hydroxyethyl cellulose.

5. The emulsion composition for a vibration damper according to Claim 1,
   wherein the emulsion composition contains an emulsion (A) with a glass transition temperature of -20 to 30°C and a weight average molecular weight of 20000 to 400000,

the film-forming agent is a polymer (B) with a glass transition temperature higher than that of the emulsion (A) and a weight average molecular weight lower than that of the emulsion (A), and
the polymer (B) content is 0.5 to 10% by mass relative to 100% by mass of the emulsion (A).

6. The emulsion composition for a vibration damper according to Claim 5,
wherein the polymer (B) has a glass transition temperature higher than that of the emulsion (A) by at least 50°C.

7. The emulsion composition for a vibration damper according to Claim 5 or 6,
wherein the polymer (B) is a tackifier.

8. A vibration damping formulation, comprising the emulsion composition for a vibration damper according to any one of Claims 1 to 7, a pigment, a foaming agent, and a thickener.

9. The vibration damping formulation according to Claim 8, comprising the emulsion composition for a vibration damper according to any one of Claims 2 to 4,
wherein the vibration damping formulation is obtainable by adding and mixing the nonionic water-soluble compound shortly before or after addition of the emulsion.

## INTERNATIONAL SEARCH REPORT

| | International application No. |
|---|---|
| | PCT/JP2009/058615 |

A.  CLASSIFICATION OF SUBJECT MATTER
*C09K3/00*(2006.01)i, *C08L101/00*(2006.01)i, *C08L101/14*(2006.01)i, *C09D5/02*
(2006.01)i, *C09D133/00*(2006.01)i, *F16F15/02*(2006.01)i

According to International Patent Classification (IPC) or to both national classification and IPC

B.  FIELDS SEARCHED

Minimum documentation searched (classification system followed by classification symbols)
C09K3/00, C08L101/00, C08L101/14, C09D5/02, C09D133/00, F16F15/02

Documentation searched other than minimum documentation to the extent that such documents are included in the fields searched
Jitsuyo Shinan Koho        1922-1996   Jitsuyo Shinan Toroku Koho    1996-2009
Kokai Jitsuyo Shinan Koho  1971-2009   Toroku Jitsuyo Shinan Koho    1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2004-018670 A  (Kabushiki Kaisha Purizumu),<br>22 January, 2004 (22.01.04),<br>Full text; particularly, Claims 1 to 2;<br>Par. Nos. [0007] to [0008]; examples 1 to 4<br>(Family: none) | 1-4,8-9<br>5-7 |
| A | WO 2007/034933 A1  (Nihon Tokushu Toryo Co.,<br>Ltd.),<br>29 March, 2007 (29.03.07),<br>& EP 1926778 A1        & CN 101268143 A<br>& KR 2008053505 A       & US 2009/048357 A1<br>& JP 2009-508972 A | 1-9 |
| A | JP 2005-308115 A  (Kabushiki Kaisha Sekiso),<br>04 November, 2005 (04.11.05),<br>(Family: none) | 1-9 |

☒ Further documents are listed in the continuation of Box C.　　　☐ See patent family annex.

| | |
|---|---|
| *　Special categories of cited documents:<br>"A"　document defining the general state of the art which is not considered   to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>    11 August, 2009 (11.08.09) | Date of mailing of the international search report<br>    25 August, 2009 (25.08.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/058615 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-281576 A   (Nippon Shokubai Co., Ltd.),<br>13 October, 2005 (13.10.05),<br>& EP 1520865 A2         & US 2005/101697 A1<br>& CN 1624015 A          & KR 2005031917 A | 1-9 |
| A | WO 99/038922 A1  (CCI Corp.),<br>05 August, 1999 (05.08.99),<br>(Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004277536 A
- JP 2005281575 A
- WO 07023821 A
- JP 2004137485 A
- JP 2005105106 A